# EUROPEAN PATENT APPLICATION

(11) **EP 1 241 512 A2**
(43) Date of publication of application: **18.09.2002**
(21) Application number: 02250025.0
(22) Date of filing: 03.01.2002
(51) Int. Cl.: G02C 9/00

(54) **Lens mounting structure for front auxiliary glasses**

(30) Priority: 14.03.2001 JP 2001072401
(71) Applicant: Eyeplus CO.Ltd., Sabae-shi, Fukui-ken (JP)
(72) Inventor: Onami, Eizo, Fukui-ken (JP); Tsubota, Masato, Fukui-ken (JP); Yamaguchi, Shigeyoshi, Fukui-ken (JP)
(74) Representative: Keltie, David Arthur

(57) **Abstract**

A lens mounting structure for front auxiliary glasses comprises eyeglasses in which a temple 15 is connected to, via a hinge 13, a connecting element 12, which is disposed at the outside of the right and left lens sections 7,7 so as to take open and close positions. A male screw comprising the hinge 13 provides a magnet 26 with a screw head of the male screw. A magnetic element 37 is provided with an end of the connecting element 33, which is disposed at the outside of the auxiliary lens section 30 of the front auxiliary glasses.

## Description

### Background of the Invention

This invention relates to a lens mounting structure for detachably mounting front auxiliary glasses to eyeglasses by means of magnetic attraction.

Various types of front auxiliary glasses are in practical use on purposes to obtain an effect of sunglasses and to aim at adjusting vision of eyeglasses in use by mounting front auxiliary glasses to the eyeglasses.

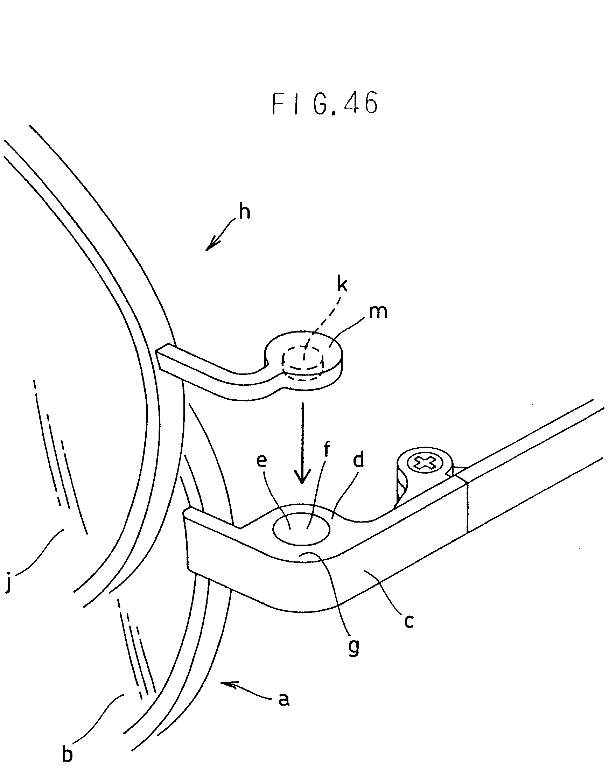

Among such front auxiliary glasses, an example of front auxiliary glasses, which is detachably mounted to eyeglasses by means of magnetic attraction, is disclosed in Japanese patent application No. 9·101489. A lens mounting structure for mounting the front auxiliary glasses was so structured, as shown in Fig. 46, that a receiving element (d) was mounted to be made project largely inside the bracket (c) which was mounted to the outside of lens (b) of glasses (a), an upper surface (f) of a magnet (e) embedded in the receiving element (d) formed an even surface with the upper surface (g) of the receiving element (d), and a mounting element (m) was mounted to an auxiliary lens (j) of a front auxiliary glasses (h), which mounting element (m) had a magnet (k) placed on the receiving element (d) and attracted the magnet (e) with each other.

According to the above-mentioned lens mounting structure for the front auxiliary glasses, the magnets (k) and (e) were attracted to each other so that the front auxiliary glasses (h) could he detachably mounted to the eyeglasses (a) by placing the magnet (k) of the mounting element (m) on the receiving element (d).

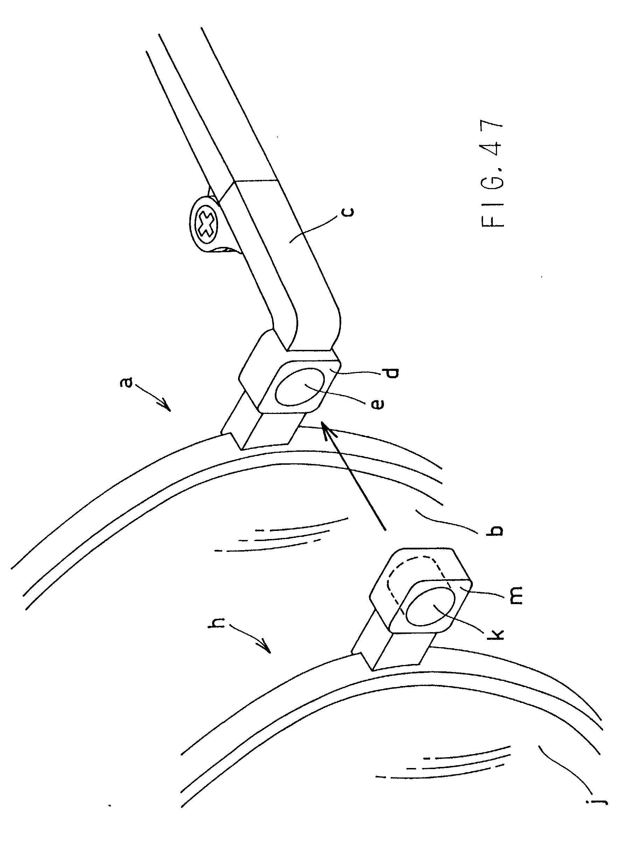

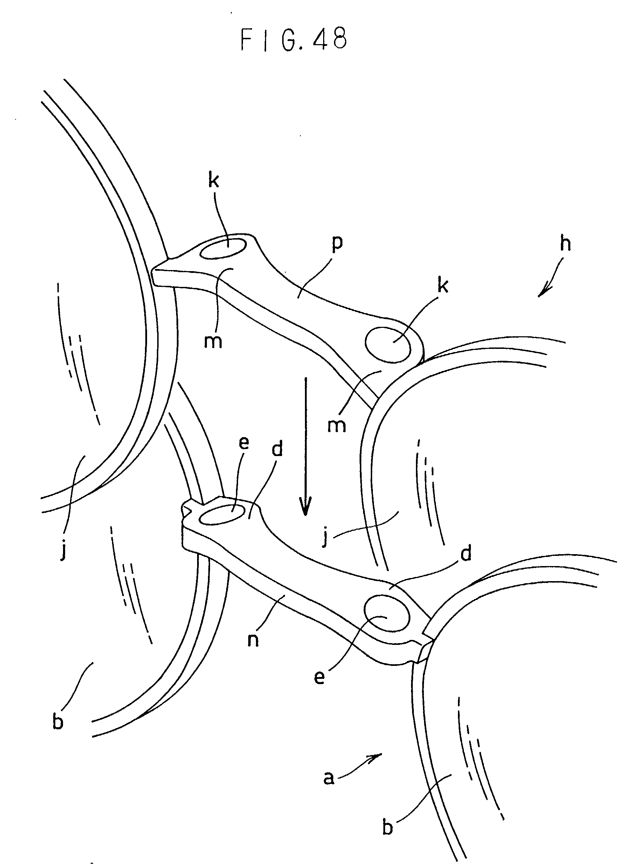

Further, structures as shown in Figs. 47 and 48, have been proposed as the other forms of a front auxiliary glasses which are freely attachable and detachable by magnet attraction. t

The lens mounting structure for he front auxiliary glasses shown in Fig. 47, had a structure, in which a receiving element (d) with large vertical and horizontal widths provided with the magnet (e) is mounted on the front side of the bracket (c) mounted outside of the lens (b) of the eyeglasses (a), and the mounting element (m) with a magnet (k) attracting the magnet (e) of the receiving element (d) with each other is mounted on the auxiliary lens (j) of the front auxiliary glasses (h) being detachably mounted on the eyeglasses (a). According to the lens mounting structure for the front auxiliary glasses having the above-mentioned structure, the above-mentioned front auxiliary glasses (h) could be detachably mounted to the eyeglasses (a) by mutual attraction of the magnets (e) and (k) by bringing the mounting element (m) into contact with the receiving element (d).

The lens mounting structure for mounting the front auxiliary glasses shown in Fig. 48 had a structure in which a bridge (n) connecting the lenses (b), (b) of the eyeglasses (a) was formed with the width between the front ends and the rear ends of both ends of the bridge (n) wide, and the receiving elements (d), (d) having the magnets (e), (e) were mounted on the upper surface of the both sides of the bridge (n), and, on both ends of a bridge (p) connecting auxiliary lenses (j), (j) of the front auxiliary glasses (h) which is detachably mounted to the eyeglasses (a), mounting elements (m), (m), which had magnets (k), (k) attracting the magnets (e), (e) of the receiving elements (d), (d) with each other, were mounted. According to the lens mounting structure for the front auxiliary glasses having the above-mentioned structure, the front auxiliary glasses (h) could be detachably mounted to the eyeglasses (a) by placing the bridge (p) of the front auxiliary glasses (h) on the bridge (n) in a manner that the magnets (e), (e) of the right and left mounting elements (m), (m) were attracted to the magnets (k), (k) of the receiving element (d),(d) with each other.

However, according to the lens mounting structure for the front auxiliary glasses of the above-mentioned structures, there was a problem that the receiving element (d) became very conspicuous and spoiled appearance of the eyeglasses, as the receiving element (d) largely projected inside the bracket (c) , appeared largely on the front side of the bracket (c) , or appeared largely on both sides of the bridge (n). Further, as a special receiving element as such was required, designs of eyeglasses were determined to be the designs having such a receiving element and so the designs were restricted. Furthermore, as the special receiving element was required the glasses as a whole became heavy, there was a problem that wearing comfortableness of the glasses was spoiled.

### Summary of the Invention

An object of the present invention is to provide a mounting device for apron type glasses that can solve the above-mentioned problems.

According to the present invention, a lens mounting structure for front auxiliary glasses in which front auxiliary glasses are mounted detachably onto eyeglasses by means of magnetic attraction, said front auxiliary glasses comprising right and left auxiliary lens sections, which are connected to each other, having a mounting element respectively at the outside of each of the auxiliary lens sections, and eyeglasses comprising a front frame having right and left lens sections, which are connected to each other, a connecting element provided with right and left outside portions of the front frame, a temple connected to the connecting element to be able to open and close by means of a hinge, said lens mounting structure further comprising; the hinge having hinge elements, each of which is mounted onto the connecting element and the temple; said hinge elements being connected to each other by means of a connecting shaft so as to be pivoted rotatably, a magnet mounted onto an upper surface of the connecting shaft, and a magnetic element, which is attractive to the magnet, mounted onto the connecting element. Then, the magnet and the magnetic element are attracted to each other so as to mount the front auxiliary glasses onto the eyeglasses in such a state that right and left auxiliary lens sections cover the right and left lens sections from the front side thereof.

Another form of the present invention is as follows. Namely, a lens mounting structure for front auxiliary glasses in which front auxiliary glasses are mounted detachably onto eyeglasses by means of magnetic attraction, said front auxiliary glasses comprising right and left auxiliary lens sections, which are connected to each other, having a mounting element respectively at the outside of each of the auxiliary lens sections, and eyeglasses comprising right and left lens sections which are connected to each other by holding lenses with a rim, said lens mounting structure further comprising; the rim separated to rim ends at its outer side portion and having upper and lower joint elements at both of the separated ends of the rim, said upper and lower joint element being connected by a connecting shaft of upper and lower directions, a magnet mounted onto an upper surface of the connecting shaft, a magnetic element, which is attractive to the magnet, mounted onto the connecting element. Then, the magnet and the magnetic element are attracted to each other so as to mount the front auxiliary glasses onto the eyeglasses in such a state that right and left auxiliary lens sections cover the right and left lens sections from the front side thereof.

Another form of the present invention is as follows. Namely, A lens mounting structure for front auxiliary glasses in which front auxiliary glasses are mounted detachably onto eyeglasses by means of magnetic attraction, said front auxiliary glasses comprising right and left auxiliary lens sections, which are connected to each other, having a mounting element respectively at the inside of each of the auxiliary lens sections, and eyeglasses comprising right and left lens sections which are connected to each other by holding lenses with a rim, said lens mounting structure further comprising; the rim separated to rim ends at its inner side portion and having upper and lower joint elements at both of the separated ends of the rim, said upper and lower joint element being connected by a connecting shaft of upper and lower directions, a magnet mounted onto an upper surface of the connecting shaft, a magnetic element, which is attractive to the magnet, mounted onto the connecting element. Then, the magnet and the magnetic element are attracted to each other so as to mount the front auxiliary glasses onto the eyeglasses in such a state that right and left auxiliary lens sections cover the right and left lens sections from the front side thereof.

Another form of the present invention is as follows. Namely, a lens mounting structure for front auxiliary glasses in which front auxiliary glasses are mounted detachably onto eyeglasses by means of magnetic attraction, said front auxiliary glasses comprising right and left auxiliary lens sections, which are connected to each other, having a mounting element respectively at the outside of each of the auxiliary lens sections, and eyeglasses comprising right and left lens sections, which are connected to each other, an outside connecting element connected to each of the outside of the right and left lens sections, said lens mounting structure further comprising; the outside connecting element connected to the lens section by means of a connecting shaft of forward and rearward directions, a magnet mounted onto a front surface of the connecting shaft, and a magnetic element, which is attractive to the magnet, mounted onto the connecting element. Then, the magnet and the magnetic element are attracted to each other so as to mount the front auxiliary glasses onto the eyeglasses in such a state that right and left auxiliary lens sections cover the right and left lens sections from the front side thereof.

Another form of the present invention is as follows. Namely, a lens mounting structure for front auxiliary glasses in which each of right and left independent auxiliary glasses is mounted detachably onto right and left lens sections of eyeglasses by means of magnetic attraction, said eyeglasses comprising right and left lens sections, which are connected to each other with their inside connecting portions, an outside connecting element connected to each of the outside of the right and left lens sections, and a temple connected to each of the outside connecting elements to be able to open and close, said lens mounting structure further comprising; the outside connecting element and the outside connecting element both being connected to the lens sections by means of a connecting shaft of forward and rearward directions, a magnet mounted onto a front surface of the connecting shaft, and a magnetic element, which is attractive to the magnet, mounted onto inside and outside portions of the auxiliary lens sections. Then, the magnet and the magnetic element are attracted to each other so as to mount the front auxiliary glasses onto the eyeglasses in such a state that right and left auxiliary lens sections cover the right and left lens sections from the front side thereof.

Where the magnet is provided with the connecting shaft which comprises a hinge or it is provided with the connecting shaft which connects the upper and lower joint elements, it is preferable that the connecting element comprises a male screw element which is screwed in up and down directions, or a screw element having a male screw element which is screwed in up and down directions and which has an axis of up and down directions.

Where the magnet is provided with the connecting shaft which comprises a hinge, it is preferable that the connecting shaft comprises a female screw element which is positioned on an upper side, and a male screw element which is positioned on a lower side, said female screw element having a female screw portion with its lower portion for screwing the male screw element, and the magnet being mounted onto the upper surface of the female screw element, thereby the temple is connected to the connecting element to be able to open and close by screwing the male screw element into the female screw element.

Where the magnet is provided with the connecting shaft which connects the upper and lower joint elements, it is preferable that the connecting element comprises a female screw element which is positioned on an upper side, and a male screw element which is positioned on a lower side, said female screw element having a female screw portion with its lower portion for screwing the male screw element, and the magnet being mounted onto the upper surface of the female screw element, thereby the upper and lower joint elements are connected to each other by screwing the male screw element into the female screw element.

Where the magnet is provided with the connecting shaft which connects the lens section to the connecting element, it is preferable that the connecting element comprises a male screw element which is screwed in forward and rearward directions, or a screw element having a male screw element which is screwed in forward and rearward directions and which has an axis of forward and rearward directions.

Where the magnet is provided with the connecting shaft which connects the lens section to the connecting element, it is preferable that the connecting element comprises a female screw element which is positioned forward, and a male screw element which is positioned rearward, said female screw element having a female screw portion with its forward portion for screwing the male screw element, and the magnet being mounted onto the front surface of the female screw element, thereby the connecting element is connected to the lens section by screwing the male screw element into the female screw element.

Where the magnet is provided with the connecting shaft which comprises a hinge or the connecting shaft which connects the upper and lower joint elements, it is preferable that the male screw provides a screw head which is provided with a concave into which the magnet is fit and fixed so as to provide the magnet with the upper surface thereof.

Where the magnet is provided with the connecting shaft which connects the lens section to the connecting element, it is preferable that the male screw provides a screw head which is provided with a concave into which the magnet is fit and fixed so as to provide the magnet with the front surface thereof.

Where the magnet is provided with the connecting shaft which connects the upper and lower joint elements and when the connecting shaft comprises the female screw element and the male screw element, it is preferable that the male screw provides a screw head which is provided with a concave into which the magnet is fit and fixed so as to provide the magnet with the front surface of the screw element.

Where the magnet is provided with the connecting shaft, which connects the connecting element to the lens section and when the connecting shaft comprises the female screw element and the male screw element, it is preferable that the male screw provides a screw head a concave of which is provided with a concave into which the magnet is fit and fixed so as to provide the magnet with the front surface of the screw element.

Where the magnet is provided with the screw head, it is possible that the upper surface of the magnet is slightly inclined downwardly from the upper surface of the screw head so as to form a fitting concave with the upper surface, so that the magnet and the magnetic element may be attracted to each other in such a state that the lower end portion of the connecting element is tightly fitted into the fitting concave, thereby the front auxiliary glasses may be attached to the eyeglasses.

Where the magnet is provided with the screw head, it is possible that the upper surface of the magnet is slightly inclined rearward from the front surface of the screw head so as to form a fitting concave with the upper surface, so that the magnet and the magnetic element may be attracted to each other in such a state that the rear end portion of the connecting element is tightly fitted into the fitting concave, thereby the front auxiliary glasses may be attached to the eyeglasses.

In each of the lens mounting structures for the front auxiliary glasses, it is preferable that the magnetic element mounted onto the connecting element comprises a magnet, which may be attracted to the magnet each other.

The present invention has superior advantages as mentioned below.
1) The lens mounting structure for the front auxiliary glasses according to the invention adopts a connecting shaft as a male screw or screw element and the like provided with a magnet, instead of a conventional screw used for constituting a hinge for eyeglasses, for connecting joint elements to each other which are mounted at both ends of a rim of glasses, and for connecting joint sections to rimless lenses. Further, in the front auxiliary glasses which are mounted onto the eyeglasses, a mounting structure with a magnetic element which can attract the magnet to each other is adopted. Consequently, according to this invention, receiving elements particular for a bracket and a bridge, which were conventionally indispensable, became unnecessary, and a problem of spoiling appearance of eyeglasses because of the very conspicuous receiving element became able to be solved. In addition, as it is not necessary to mount the receiving element, there is an advantage that eyeglasses can be designed freely without any restriction, just as designing conventional eyeglasses, which are not intended to have front auxiliary lenses. Accordingly, designs of front auxiliary glasses, which were restricted, can be diversified, and popularization of front auxiliary lenses can be expectd. In addition, the problem can also be solved that eyeglasses becomes heavy because of the receiving element and wearing comfortableness of the eyeglasses is spoiled.
2) Further, according to this invention, as it is easy to alter the conventional eyeglasses to the eyeglasses which accords to the invention by changing the screws used in the conventional eyeglasses to the above-mentioned male screw or the screw element, no such problems arise like troublesome manufacturing and rising in manufacturing costs caused by necessity to design and manufacture eyeglasses having a special receiving element.
3) When a male screw or screw element having a screw head is adopted as the above-mentioned connecting shaft, and a magnet is embedded in a concave provided with the screw head, in case the surface of the magnet is retreated from the surface of the screw head to form a continuous concave,

### Brief Description of the Invention

The drawings show embodiments of a lens mounting structure for front auxiliary glasses according to the present invention in which:-
Fig. 1 is a perspective view showing eyeglasses and front auxiliary glasses disassembled,
Fig. 2 is a perspective view showing a state that the front auxiliary glasses are mounted onto the eyeglasses,
Fig. 3 is a perspective showing a structure of each of a hinge section of the eyeglasses and a connecting element of the front auxiliary glasses in an enlarged scale,
Fig. 4 is a plan view showing a state that a temple is connected to the connecting element via a hinge,
Fig. 5 is a sectional view showing a state of attraction that a magnet of the eyeglasses and a magnetic element of the front auxiliary glasses,
Fig. 6 is a perspective view showing a structure of an ordinary hinge for conventional eyeglasses,
Fig. 7 is a perspective view showing a state that a screw is removed away from the conventional eyeglasses, and a male screw comprising a connecting shaft,

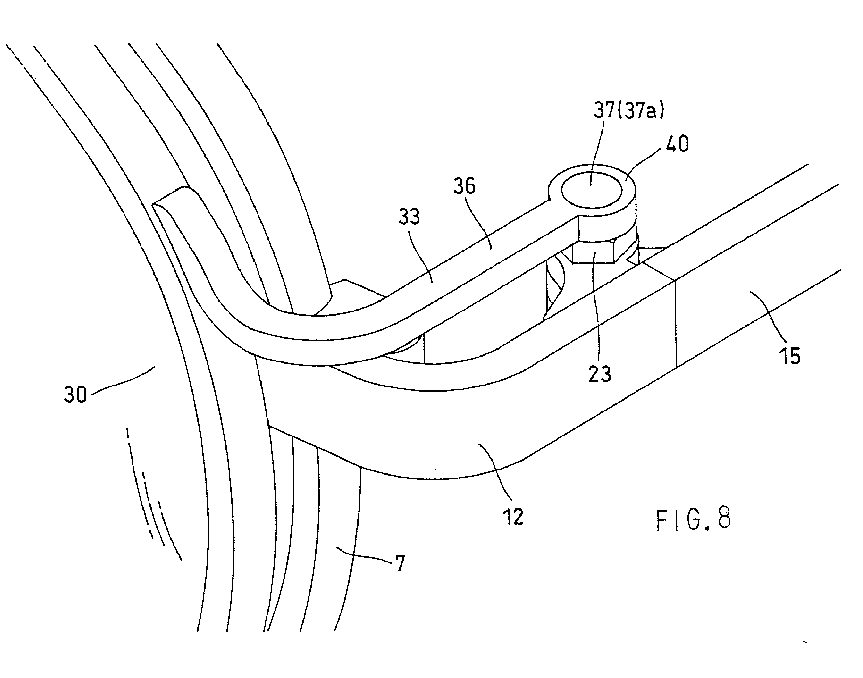

Fig. 8 is a perspective view showing that the front auxiliary glasses are mounted onto the eyeglasses with attraction by means of a magnet and a magnetic element,
Fig. 9 is a disassembled perspective view showing another form of a lens mounting structure for front auxiliary glasses in which the front auxiliary glasses may be attached to the eyeglasses by utilizing a magnet which is provided with a connecting shaft of a hinge,
Fig. 10 is a perspective view showing a state that the front auxiliary glasses are attached to the eyeglasses,
Fig. 11 is a disassembled perspective view showing another form of a lens mounting structure for front auxiliary glasses in which the front auxiliary glasses may be attached to the eyeglasses by utilizing a magnet which is provided with a connecting shaft of a hinge,
Fig. 12 is a disassembled perspective view for describing a structure of the hinge,
Fig. 13 is a sectional view showing a state of attraction between a magnet mounted onto a connecting shaft comprising a hinge for the eyeglasses and a magnetic element mounted onto a connecting element of the front auxiliary glasses,
Fig. 14 is a perspective view showing a state that the front auxiliary glasses are attached to the eyeglasses,
Fig. 15 is a disassembled perspective view showing another form of a lens mounting structure for front auxiliary glasses in which the front auxiliary glasses may be attached to the eyeglasses by utilizing a magnet which is provided with a connecting shaft of a hinge,
Fig. 16 is a disassembled perspective view for describing a structure of a hinge for the eyeglasses,
Fig. 17 is a disassembled perspective view for describing a structure of a hinge of the eyeglasses,
Fig. 18 is a sectional view showing a state of attraction between a magnet mounted onto a connecting shaft comprising a hinge for the eyeglasses and a magnetic element mounted onto a connecting element of the front auxiliary glasses,
Fig. 19 is a perspective view showing a state that the front auxiliary glasses are attached to the eyeglasses,
Fig. 20 is a disassembled perspective view showing a state that a rim comprising a lens section of the eyeglasses is separated at its outer side portion, and that a magnet is provided with a connecting shaft for connecting upper and lower joint elements which are provided with the side ends of the rim,
Fig. 21 is a perspective view showing the joint elements of both sides of the rim and a connecting shaft for connecting both of the joint elements,
Fig. 22 is a sectional view showing a state of attraction between a magnet mounted onto a connecting shaft comprising a hinge for the eyeglasses and a magnetic element mounted onto a connecting element of the front auxiliary glasses,
Fig. 23 is a perspective view showing a state that the front auxiliary glasses are attached to the eyeglasses,
Fig. 24 is a a disassembled perspective view showing a state that a rim comprising a lens section of the eyeglasses is separated at its outer side portion, and that a magnet is provided with a connecting shaft for connecting upper and lower joint elements which are provided with the side ends of the rim,
Fig. 25 is a is a perspective view showing the joint elements of both sides of the rim and a connecting shaft for connecting both of the joint elements,
Fig. 26 is a sectional view showing a state of attraction between a magnet mounted onto a connecting shaft for connecting the upper and lower joint elements and a magnetic element mounted onto a connecting element of the front auxiliary glasses,
Fig. 27 is a perspective view showing a state that the front auxiliary glasses are attached to the eyeglasses,
Fig. 28 is a disassembled perspective view showing another form of a lens mounting structure for front auxiliary glasses in which a connecting shaft connects joint elements on the both sides of the rim,
Fig. 29 is a perspective view showing the joint elements on the both sides of the rim and the connecting shaft for connecting both of the joint elements,
Fig. 30 is a sectional view showing a state of attraction between a magnet mounted onto a connecting shaft for connecting the upper and lower joint elements and a magnetic element mounted onto a connecting element of the front auxiliary glasses,
Fig. 31 is a perspective view showing a state that the front auxiliary glasses are attached to the eyeglasses,
Fig. 32 is a disassembled perspective view showing a lens mounting structure for front auxiliary glasses which is adapted for two-point eyeglasses, in which a magnet is provided with a connecting portion of a connecting element for lens section,
Fig. 33 is a perspective view showing a connecting structure of the connecting element for the lens section disassembled,
Fig. 34 is a sectional view showing a state of attraction between a magnet mounted onto a connecting shaft for connecting the upper and lower joint elements and a magnetic element mounted onto a connecting element of the front auxiliary glasses,
Fig. 35 is a disassembled perspective view for describing a structure of a connecting element of the front auxiliary glasses,
Fig. 36 is a perspective view showing a state that that the front auxiliary glasses are attached to the eyeglasses,
Fig. 37 is a disassembled perspective view showing a lens mounting structure for front auxiliary glasses which is adapted for two-point eyeglasses, in which a magnet is provided with four connecting portions of outer and inner connecting elements for lens section,
Fig. 39 is a disassembled perspective view showing a lens mounting structure for front auxiliary glasses in which right and left independent auxiliary lens sections is attached respectively to right and left lens sections of two-point glasses,
Fig. 40 is a perspective view showing an auxiliary lens section which is provided with a connecting element at the inside and outsides thereof,
Fig. 41 is a perspective view showing a state that the auxiliary lens section is attached to the lens section,
Fig. 42 is a perspective view showing another form of a male screw, which is provided with a magnet on the screw head thereof,
Fig. 43 is a perspective view showing a male screw, which is provided with a magnet on the screw head thereof and a fitting concave on the screw head therefor,
Fig. 44 is a sectional view showing a state that a lower end portion of the magnetic element of the connecting element is fit into the fitting concave tightly so as to attract the magnet and the magnetic element each other,

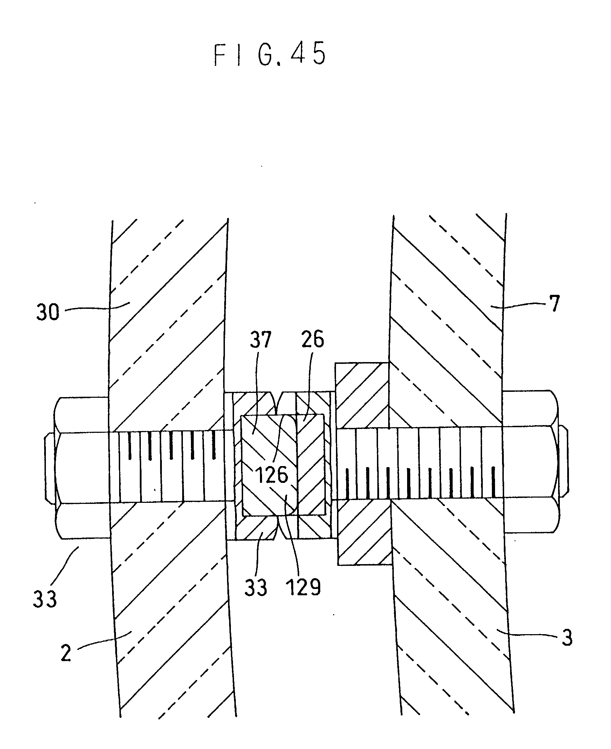

Fig. 45 is a sectional view showing a state that a rear end portion of the magnetic element of the connecting element is fit into the fitting concave tightly so as to attract the magnet and the magnetic element each other,
Fig. 46 is a disassembled perspective view showing an example of a convention lens mounting structure for front auxiliary glasses in which the front auxiliary glasses is detachable with respect to the eyeglasses by means of magnetic attraction,
Fig. 47 is a disassembled perspective view showing another form of a conventional lens mounting structure, and
Fig. 48 is a disassembled perspective view showing another form of a conventional lens mounting structure.

### Detailed Description of the Preferred Embodiments

Embodiments of the present invention will be described below with reference to the drawings.

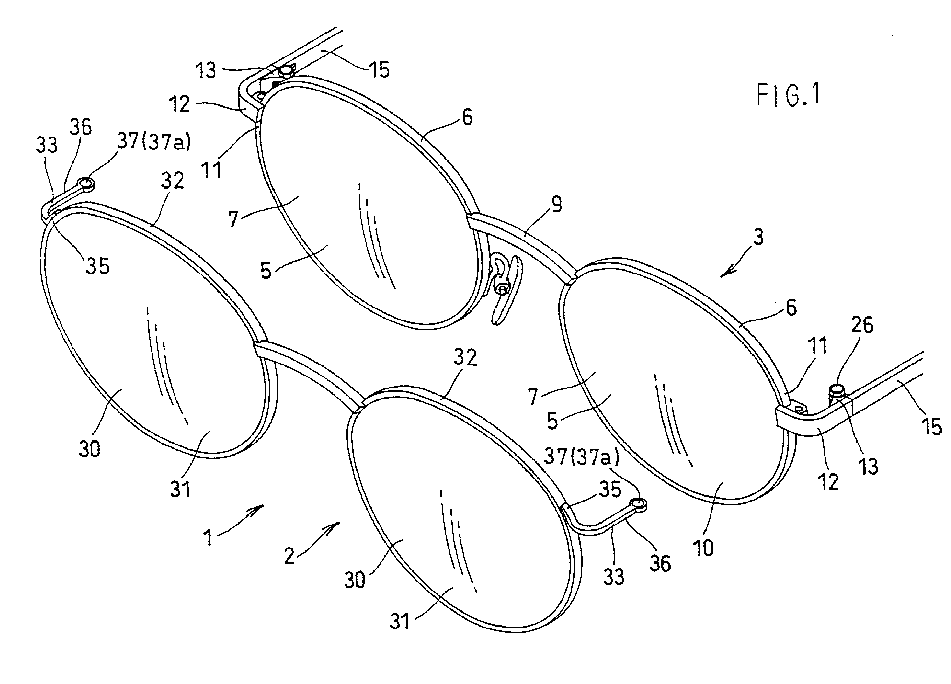

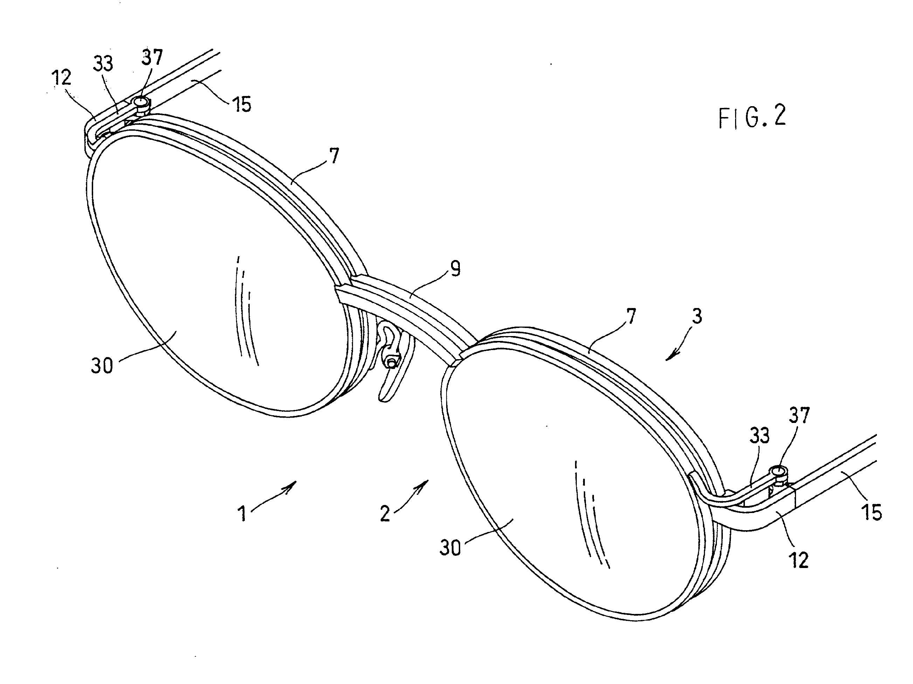

In Figs. 1 and 2, a lens mounting structure 1 for front auxiliary glasses according to the present invention enables the front auxiliary glasses 2 to be detachably mounted to eyeglasses 3 which are structured as sunglasses, for example, by means of magnetic attraction.

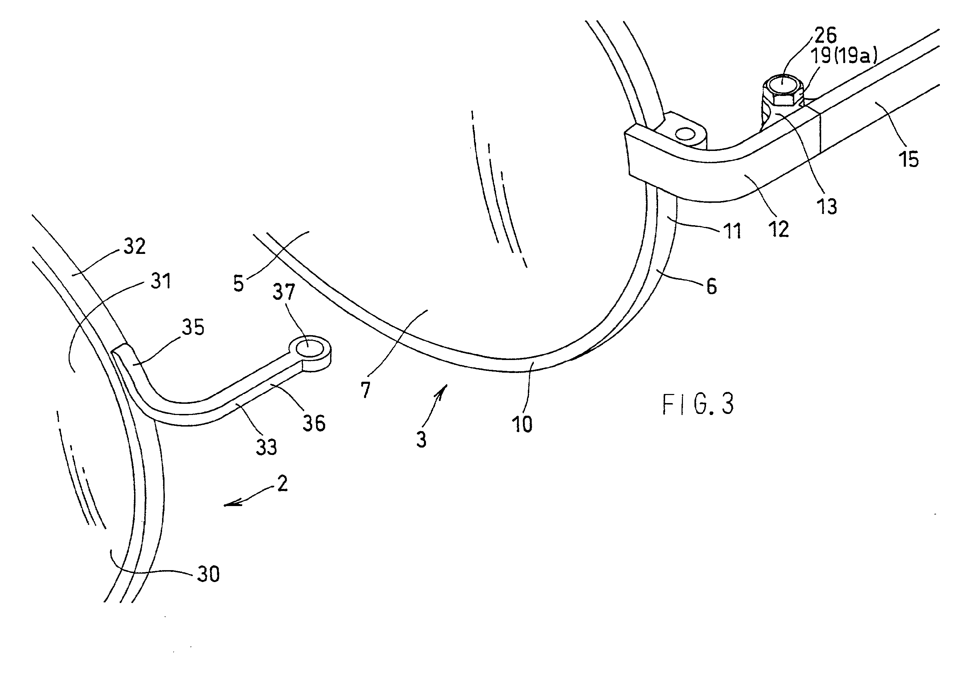

As shown in Fig. 1 and 3, the eyeglasses 3 is structured in a manner that a connecting element 12 is connected to right and left outside portions 11,11 of a front frame 10 respectively, and inner portions of right and left lenses 7,7 structured by holding lenses 5 with a rim 6 are connected to each other by means of a bridge 9. The connecting element 12 is structured as a bracket to form a L-letter shape which projects laterally and bends rearwards, and then a temple 15 is connected to the rear end portion of the connecting element 12 by means of a hinge 13, so that the temple may be open and close.

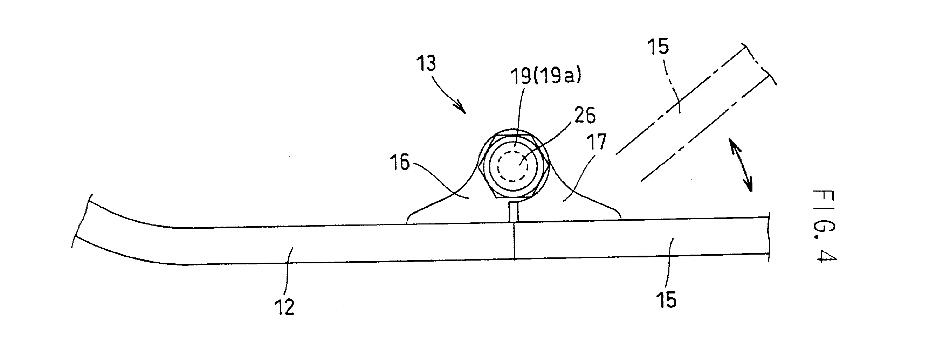

As shown in Figs. 3 to 5, a hinge 13 consists of hinge elements 16, 17, each of which is mounted onto each of the inner surface of the connecting element 12 and a temple 15, and a male screw 19a to function as a connecting shaft 19, which hinge elements 16, 17 are pivotally mounted to each other so that the temple 15 can open and close as shown by an arrow in Fig. 4.

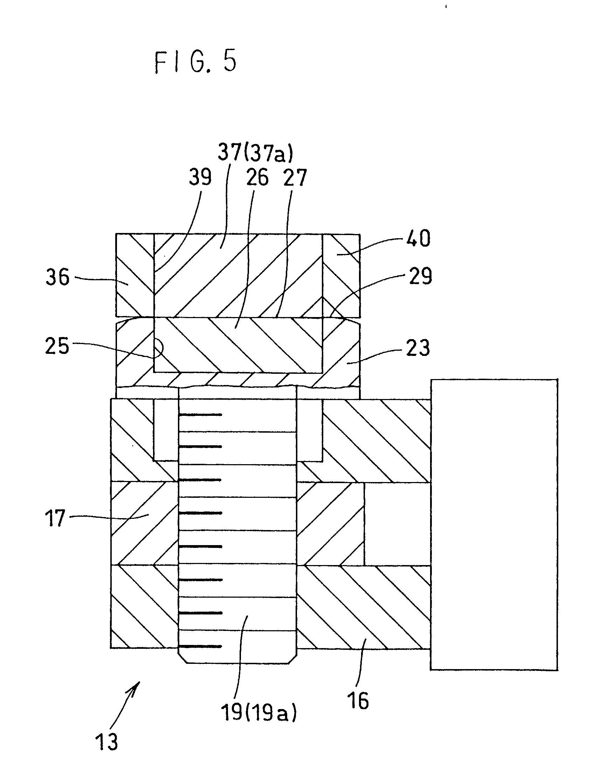

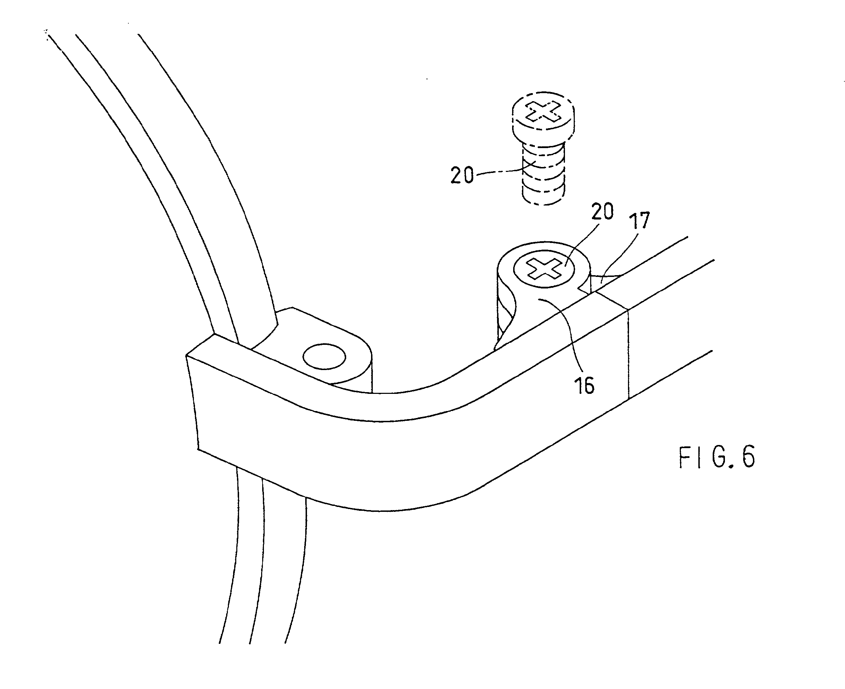

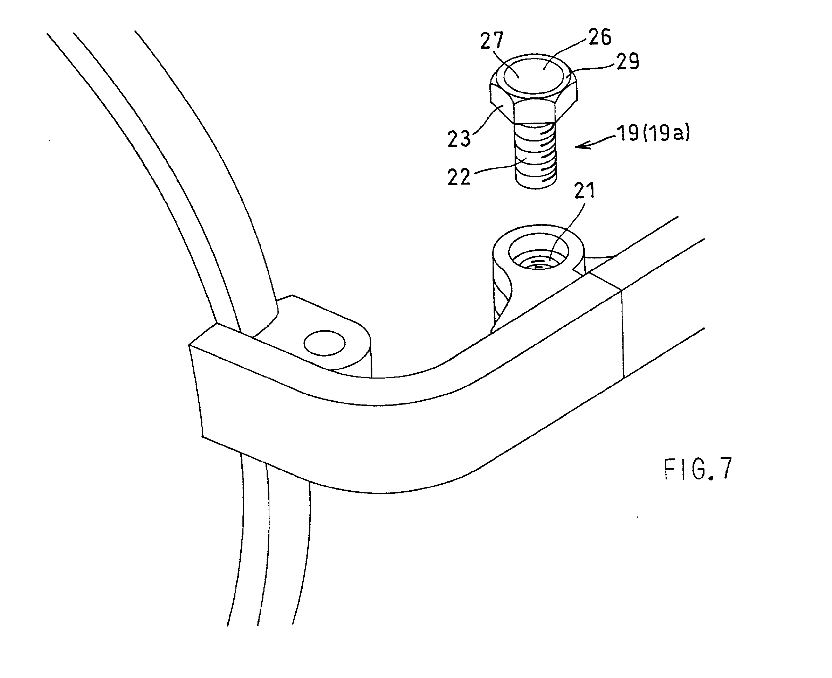

According to the embodiments of the present invention, the glasses 3 are not particularly structured but are ordinary glasses that are generally used. An original structure of the hinge 13 is that an ordinarily formed screw 20 connects the two hinges 16, 17 to each other as shown in Fig. 6. The male screw 19a is screwed into a screw hole 21 after a ready installed screw 20 is removed therefrom as shown in Fig. 7, and have a hexagonal, for example, screw head 23 at one end of the screw rod 22 that has the same diameter with the removed screw 20. As shown in Fig. 5, a circular concave 25 is provided with in the screw head 23, a flat disk-shaped magnet 26 is embedded and fixed into the concave 25 by means of solder, and an upper surface 27 of the magnet 26 is made to form an even surface with an upper surface 29 of the screw head 23. It is recommended to use a strong neodymium magnet as the magnet 26.

As shown in Figs. 1 to 3, the front auxiliary glasses 2 has the right and left auxiliary lens sections 30,30 which can cover the right and left lens sections 7,7 over the front side thereof, each of the auxiliary lens sections 30,30 constitutes of an auxiliary lens 31 held and supported by a rim 32, and each of the mounting elements 33,33 is provided with on the outer side of the rim 32. The mounting element 33 consists of an arm 36 which is attached to the auxiliary lens section 30 by means of solder at the base end 35 of the arm 36, and a magnetic element 37 which can attract the magnet 26 with each other. In the embodiment of this invention, the magnetic element 37 consists of a magnet 37a which can attract the magnet 26 with each other, and as shown in Fig. 5, the magnet 37a is inserted and fixed into a mounting hole 39 bored in the tip of the arm 36.

Thus, the front auxiliary glasses 2 can be attached stably to the eyeglasses 3 by bringing the right and left auxiliary lens sections 30,30 into contact with the right and left lens sections 7, 7 in a manner that the former cover the latter from the front side as shown in Fig. 2, and by placing a tip portion 40 of the mounting element 33 on the upper surface of the screw head 23 of the male screw 19 so that the magnet 26 and the magnetic element 37 (the magnet 37a) can be attracted to each other.

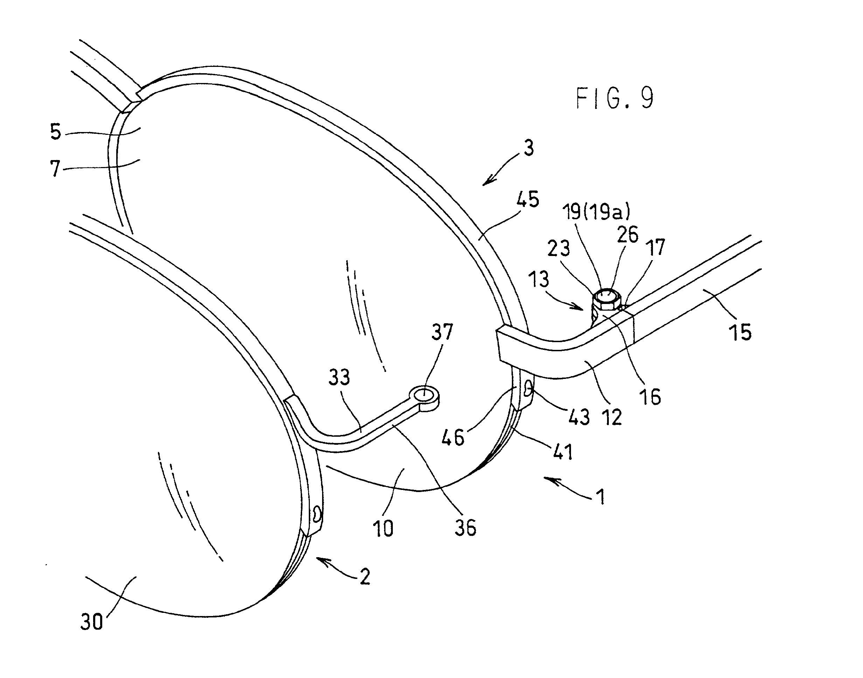

Figs. 9 and 10, Figs. 11 to 14, and Figs. 15 to 19 show the other embodiments of the lens mounting structure 1 for front auxiliary glasses according to this invention, in which the front auxiliary glasses 2 can be attached to the eyeglasses 3 by using the magnet 26 incorporated in the hinge 13, the structure of which is the same with the structure of the above-mentioned lens mounting structure 1 for front auxiliary glasses except for the structures of the lens section 7 of the eyeglasses 3 and of the auxiliary lens section 30 of the front auxiliary glasses 2.

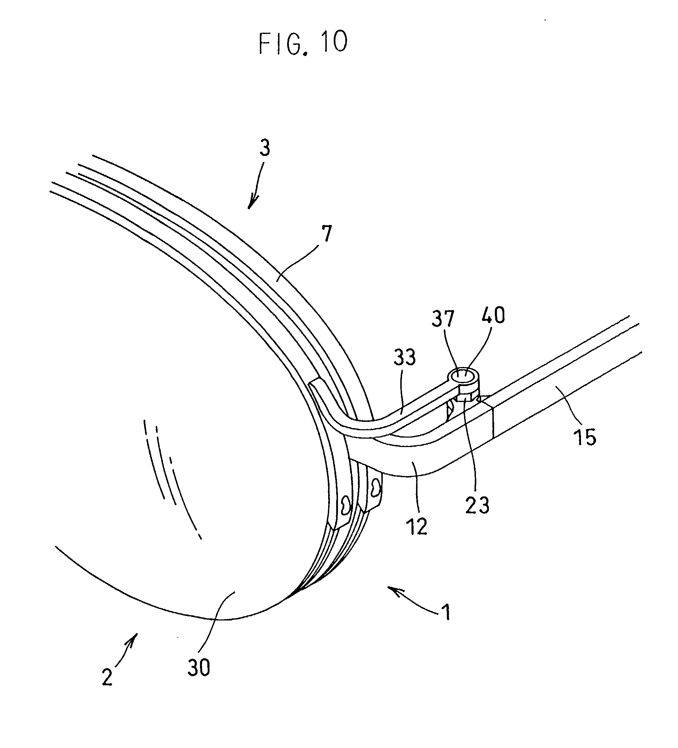

The eyeglasses 3 used in the lens mounting structure 1 for the front auxiliary glasses 1 shown in Figs. 9 and 10 are structured in a manner that the lens section 7 constituting a front frame 10 is secured to an end portion 46 of a frame 45 of laid U·letter form which is arranged along the upper edge of the lens 5. Further, the temple 15 is connected to the connecting element 12 being a bracket mounted to the outer side of the front frame 10 via the hinge 13 in a manner that the temple 15 can open and close. In the hinge 13, the hinge elements 16 and 17 are pivotally mounted to each other by the connecting shaft 19 as the male screw 19a which is vertically screwed, being the same structure as the above-mentioned. The male screw 19a has the hexagonal screw head 23 in which the magnet 26 is mounted in a manner that the upper surface of the magnet 26 forms an even surface with the upper surface of the screw head 23 as above-mentioned.

In the meantime, the auxiliary lens section 30 constituting the front auxiliary glasses 2 has the same structure as the above-mentioned lens section 7 as shown in Figs. 1 and 3, in which the mounting element 33 is mounted to the outer side of the rim, and at the tip of the arm 36, the magnetic element 37 being a magnet which can attract the magnet 26 with each other as above-mentioned is mounted.

Thus, as shown in Fig. 10, the front auxiliary glasses 2 can be attached stably to the eyeglasses 3 by bringing the front auxiliary glasses 2 into contact with the eyeglasses 3 in a manner that the right and left auxiliary lens section 30, 30 cover the right and left lens sections 7, 7 from the front side, and by placing the end portion 40 of the mounting element 33 on the screw head 23 of the male screw so that the magnet 26 and the magnetic element 37 can attract to each other.

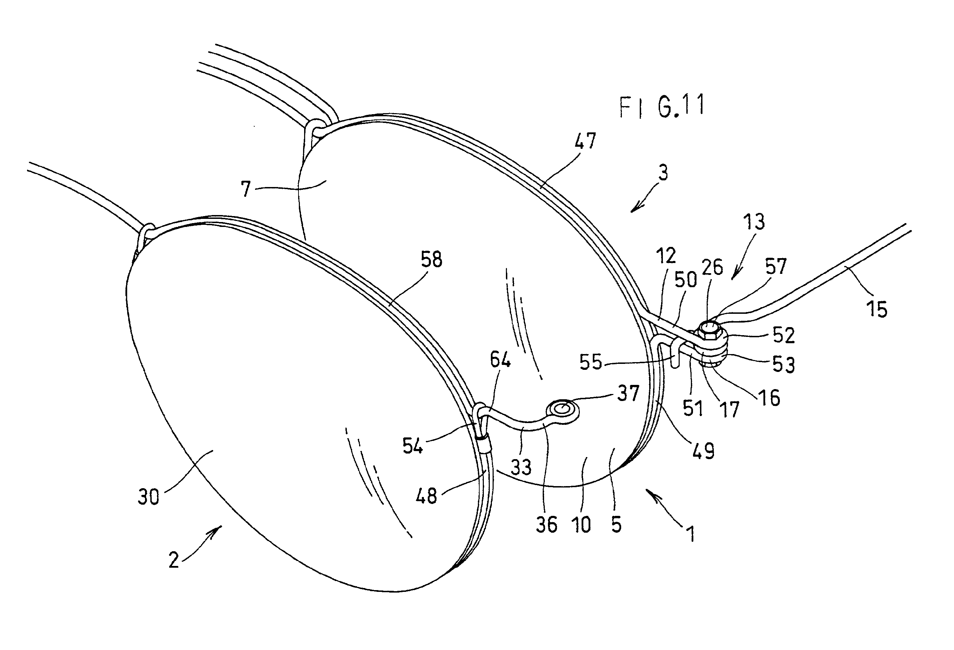

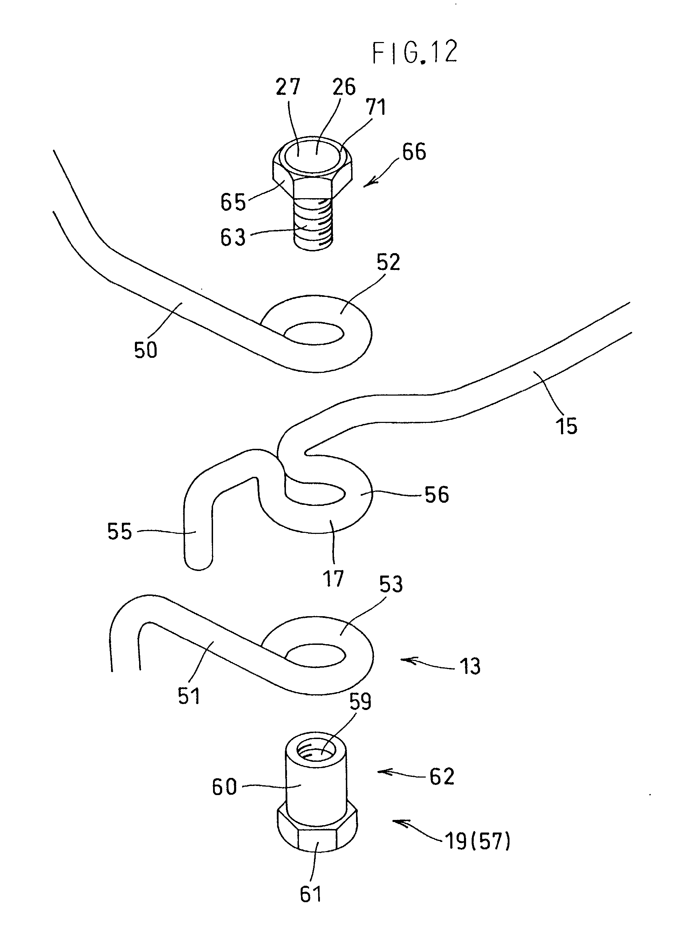

Further, in the eyeglasses 3 used for the lens mounting structure 1 for the front auxiliary glasses shown in Fig. 11, the lens section 7 constituting the front frame 10 is so structured that a lens 5 is held and supported by linear frames 47, 49 divided into upper and lower portions. Each of the outer side of the upper and lower linear frames 47, 49 projects outwardly and forms each of projections 50, 51. Each of the tips of the upper and lower projections 50, 51 is bended in the same direction to form an arc as shown in Fig. 12, and upper and lower bended arc portions 52, 53 formed in this manner has the same axis. The upper and lower projections 50, 51 formed in this manner constitute the connecting element 12 of the front frame 10, and the lower and upper bended ark portions 52, 53 form the hinge element 16. The front end of the temple 15 is bended to form an arc, whose diameter is almost the same as the diameter of the upper and lower bended arc portions 52, 53, to form a hinge element 17, and the tip portion of the temple 15 bends downwardly to form a stopper element 55, as shown in Fig. 12.

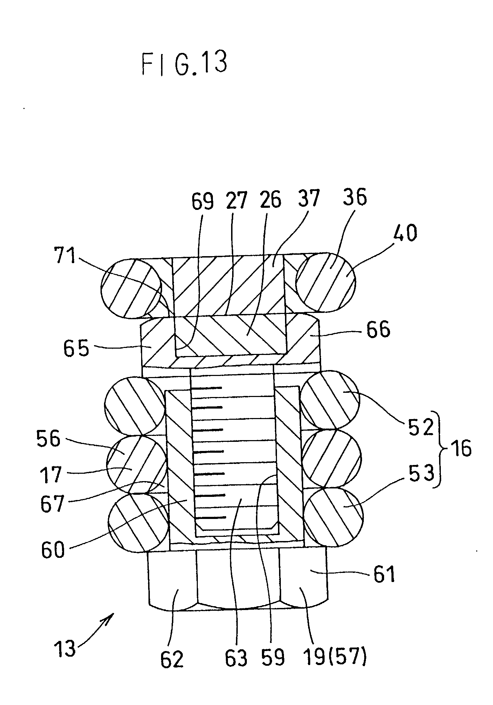

As shown in Fig. 13, the above-mentioned hinge 13 is so structured that a bended arc portion 56 of the temple 15 intervenes between the upper and lower bended arc portions 52 and 53, and 3 layers of the bended arc portions 52, 56, 53 are connected by a screw element 57 being a connecting shaft 19, and the hinge element 16 consisting of the upper and lower bended arc portions 52, 53 and the above-mentioned hinge element 17 formed at the side of the temple are pivotally mounted to each other.

As shown in Fig. 12 and 13, the screw element 57 consists of a female screw element 62 which has a hexagonal, for example, projecting stopper 61 at the lower end of a cylindrical element 60 with a screw hole 59 whose axis is vertical, and a male screw element 66 having a hexagonal, for example, screw head 65 at the upper end of a screw rod 63 which is to be vertically screwed into the screw hole 59, the axis of which is also vertical. Further, as shown in Fig. 13, the hinge elements 16 and 17 are pivotally mounted to each other by tightly inserting the cylindrical element 60 of the female screw element 62 into the a hole 67 formed by a layer of the bended arc portions 52, 56, 53 from the downside, and fitting the screw rod 63 of the male screw element 66 into the screw hole 59 and screw up properly. Thus the temple 15 is made to be able to open and close, and as the stopper element 55 is joined with the projection 51 as shown in Fig. 11, the maximum angle of opening is restricted. Further, in a screw head 65 of a male screw element 66, the flat disc-shaped magnet 26 is embedded and fixed into a circular concave 69 as shown in Fig. 13 so that the upper surface 27 of the magnet 26 forms an even surface with a surface 71 of the screw head 65.

On the other hand, the auxiliary lens section 30 comprising the front auxiliary glasses 2, as shown in Fig. 11, an end portion 54 of a cord 48 is secured to an end portion of a frame 58. The cord 48 is fitted and fixed at the outer periphery of the lower side of the auxiliary lens section 30. The frame 58 is disposed along the upper edge of the auxiliary lens section 30. A connecting element 33 is provided with the outside of the frame of the auxiliary lens section 30, and a magnetic element 37, which is attracted to the magnet 26 each other, is provided with a forward end portion of an arm 36 in the same manner as mentioned above.

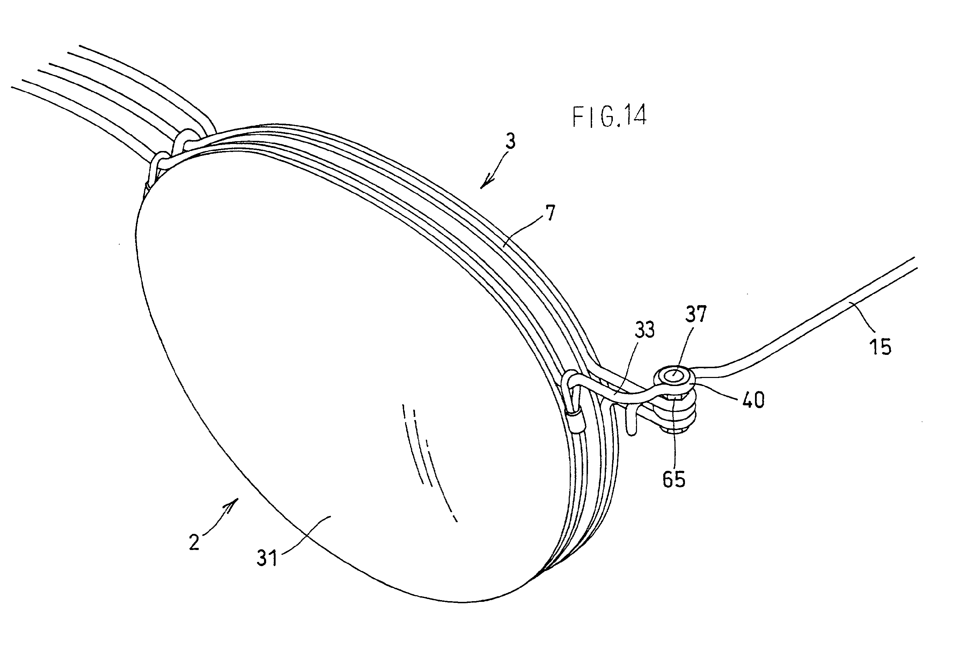

Thus, as shown in Figs. 14 and 13, the front auxiliary glasses 2 can be attached stably to the eyeglasses 3 by bringing the right and left auxiliary lenses 31, 31 into contact with the right and left lens sections 7, 7 in a manner that the former cover the latter from the front side, and by placing the tip portion 40 of the mounting element 33 on the upper surface of the screw head 65 of the male screw element 66 so that the magnet 26 and the magnetic element 37 can be attracted to each other.

Further, the temple 15 is connected to the rear end of the connecting element 12 as a bracket which is mounted onto outer side of the front frame 10 via the hinge 13 so that the temple 15 can open and close.

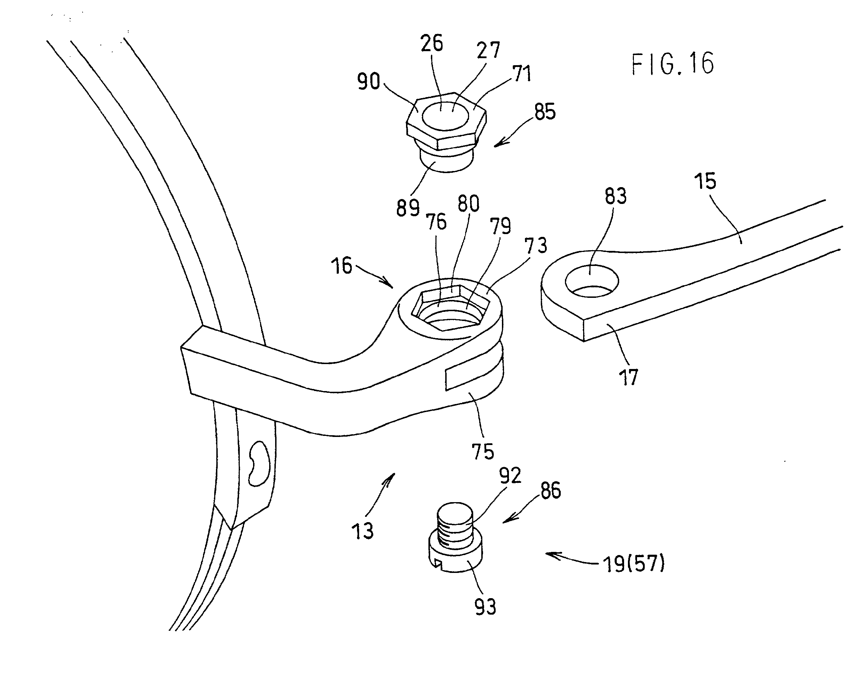

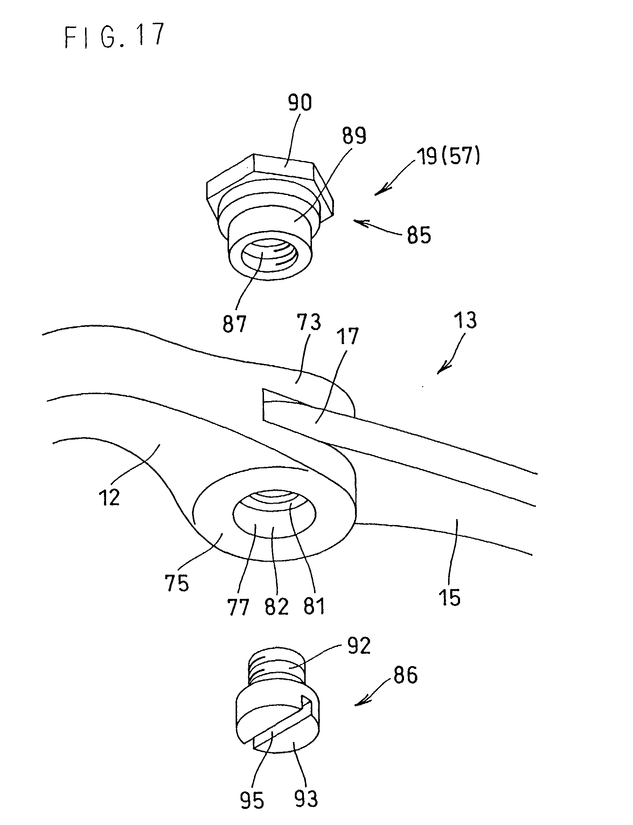

As shown in Figs. 16 to 18, upper and lower bearing elements 73, 75 facing to each other with space in-between are mounted to the rear end of the connecting element 12 and form the hinge element 16. As shown in Figs 16 and 17, the bearing elements 73, 75 have an upper hole 76 and a lower hole 77, the axes of both of which are identical. The upper hole 76 has a structure that an upper hexagonal hole 80 is concentrically joined to a lower circular hole 79, and the lower hole 77 has a structure that a circular hole 82 is concentrically joined to a circular hole 81 at the end thereof, the diameter of the former being larger than the diameter of the latter. Further, as shown in Fig. 16, the front end of the temple 15 is formed to be the hinge element 17, which is provided with a hole 83 whose axis is identical to the axes of the upper hole 76 and the lower hole 77. The hinge elements 16, 17 are pivotally joined to each other by a screw element 57 as a connecting shaft 19 so that the temple 15 can open and close.

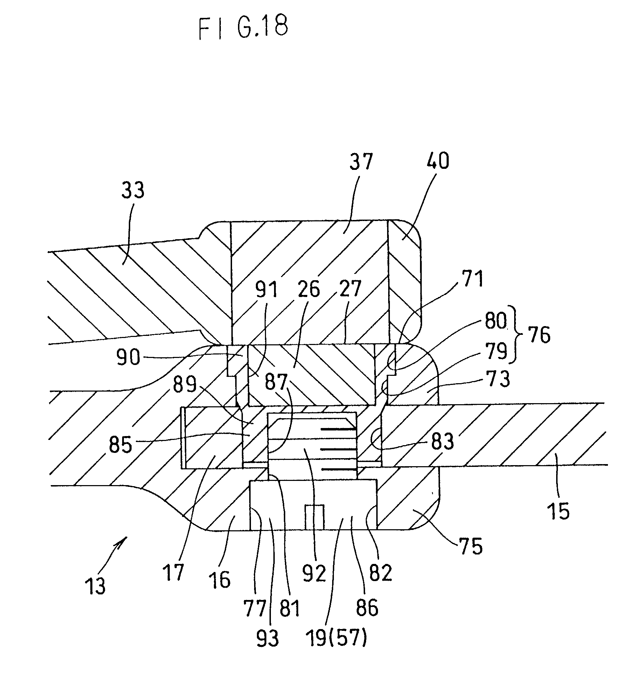

As shown in Figs. 16 to 18, the above-mentioned screw element 57 consists of a female screw 85 located on the upper side and a male screw element 86 located on the lower side, both of whose axes are vertical. The female screw element 85 consists of a cylindrical element 89 provided with a screw hole 87 and a hexagonal screw head 90 at the upper end of the cylindrical element 89, as shown in Fig. 17. A flat disc-shaped magnet 26 is embedded and fixed into a circular concave 91 formed in the screw head 90 as shown in Fig. 18 in a manner that the upper surface 27 of the magnet 26 is formed to make an even surface with the upper surface 71 of the screw head 90. As shown in Fig. 17, the above-mentioned male screw element 86 consists of a screw rod 92, which is to be screwed into the screw hole 87, a screw head 93 mounted at the lower end of the screw rod 92, and a groove 95 of the screw head 93 into which a tip of a screwdriver is to be inserted.

In constructing the hinge 13, the female screw element 85 is placed into the upper hole 76, while the upper hole 76, the lower hole 77 and the above-mentioned hole 83 are in fit with one another, as shown in Fig. 18. At this time, the cylindrical element 89 of the female screw element 85 is tightly inserted into the circular hole 79 of the upper hole 76 and the screw head 90 fits into the hexagonal hole 80, by which the female screw element 85 is made to stop rotating vis-à-vis the hinge element 16.

Under the above condition, when the screw rod 92 of the male screw element is fitted into the screw hole 87 of the female screw element 85 and is screwed up properly, the hinge elements 16, 17 are pivotally mounted to each other.

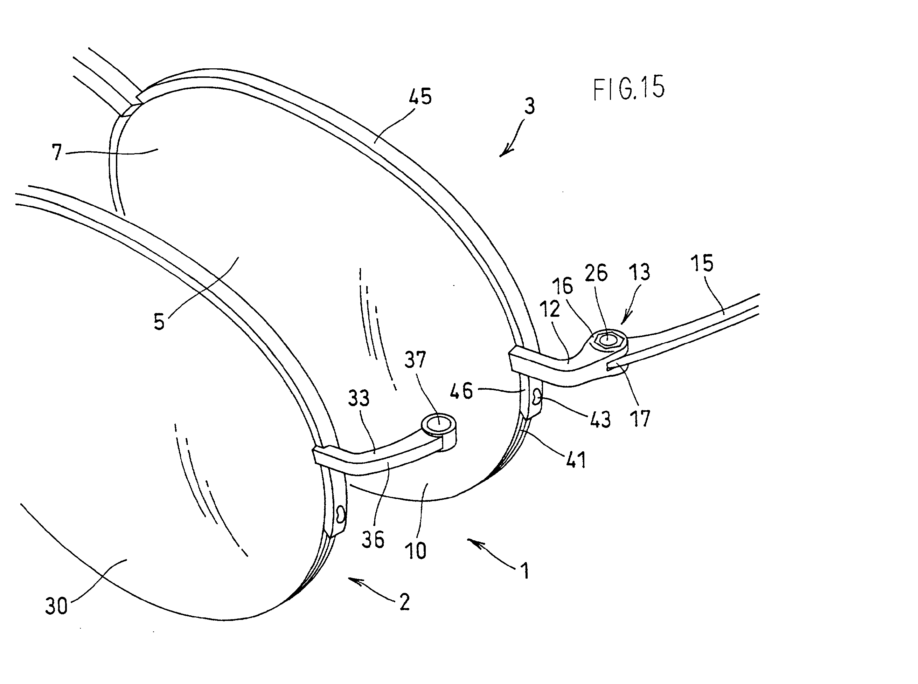

Further, the auxiliary lens section 31 constituting the above-mentioned front auxiliary glasses 2 also has the same structure as of the lens section 7, and as shown in Fig. 15, a mounting element 33 is mounted onto the outer side of the rim of the auxiliary lens section 30, and the magnetic element 37 being a magnet which can attracts the magnet 26 with each other is mounted at the tip of the arm 36, in the same manner as the above-mentioned.

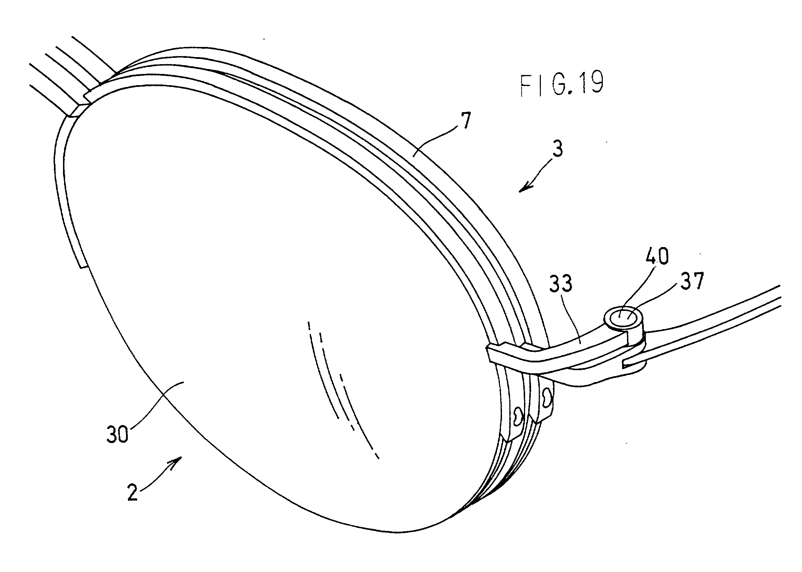

Thus, as shown in Fig. 19 and 18, the front auxiliary glasses 2 can be attached stably to the eyeglasses 3 by bringing the right and left auxiliary lenses 30, 30 into contact with the right and left lens sections 7, 7 in a manner that the former covers the latter from the front side, and by placing the tip portion 40 of the mounting element 33 on the upper surface of the screw head 90 of the male screw element 85 so that the magnet 26 and the magnetic element 37 can be attracted to each other.

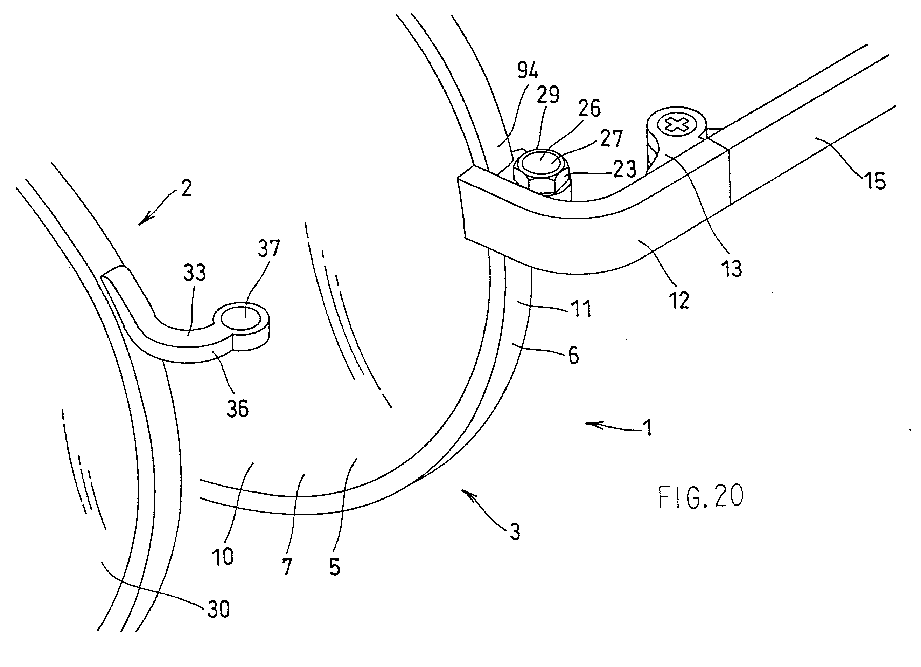

Fig. 20 shows another embodiment of the lens mounting structure 1 for the front auxiliary glasses according to this invention. The eyeglasses 3 used therein are structured in a manner that the inner sides of the right and left lens sections 7, 7, in which the lens 5 is held and supported by the rim 6, are connected to each other by a bridge,

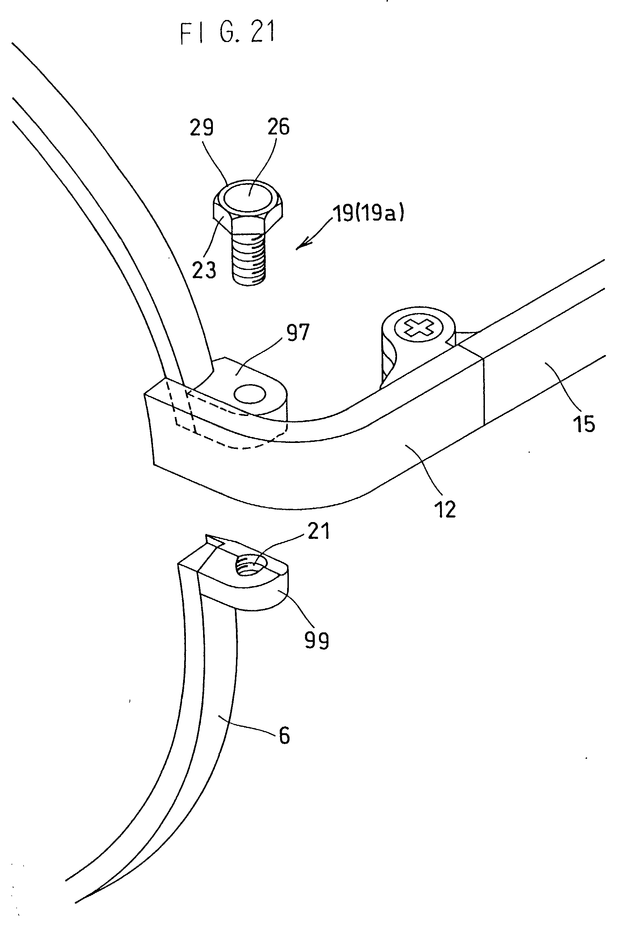

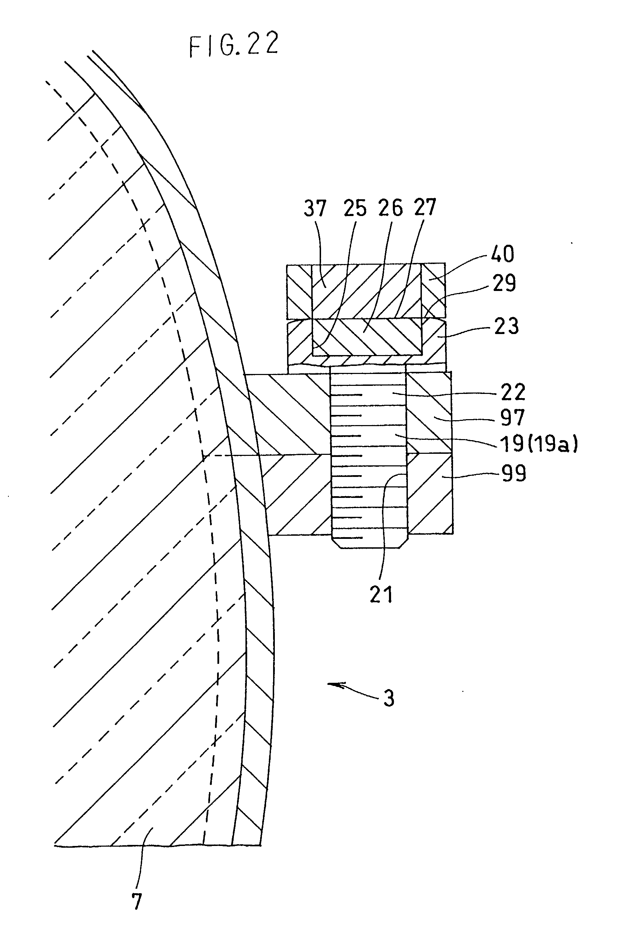

As shown in Fig. 21, the rim 6 is separated at an outer side portion 94 to be provided with joint elements 97, 99 at both of the separated ends of the rim 6. As shown in Fig. 22, the upper and lower joint elements 97, 99 are connected to each other by a male screw 19a as a connecting shaft 19 which is to be screwed vertically. The upper joint element 97 is fixed to the connecting element 12. The male screw 19a is screwed into a screw hole 21 after a ready installed screw for connecting the joint elements 97, 99 are removed therefrom as shown in Fig. 22, and have a hexagonal, for example, screw head 23 at one end of the screw rod 22 that has the same diameter with the removed screw.

The flat disk-shaped magnet 26 is embedded and fixed in the concave 25 which is provided with in the screw head 23 as shown in Fig. 22, and as shown in Figs. 20 and 21, the upper surface 27 of the magnet 26 is made to form an even surface with the upper surface 29 of the screw head 23.

As shown in Fig. 20, the apron type glasses 2 to be attached to the eyeglasses 3 are provided with the mounting element 33 at the outer side of the right and left auxiliary lens section 30 connected to each other and the magnetic element 37 as a magnet which can attract the magnet 26 with each other at the tip of the arm 36.

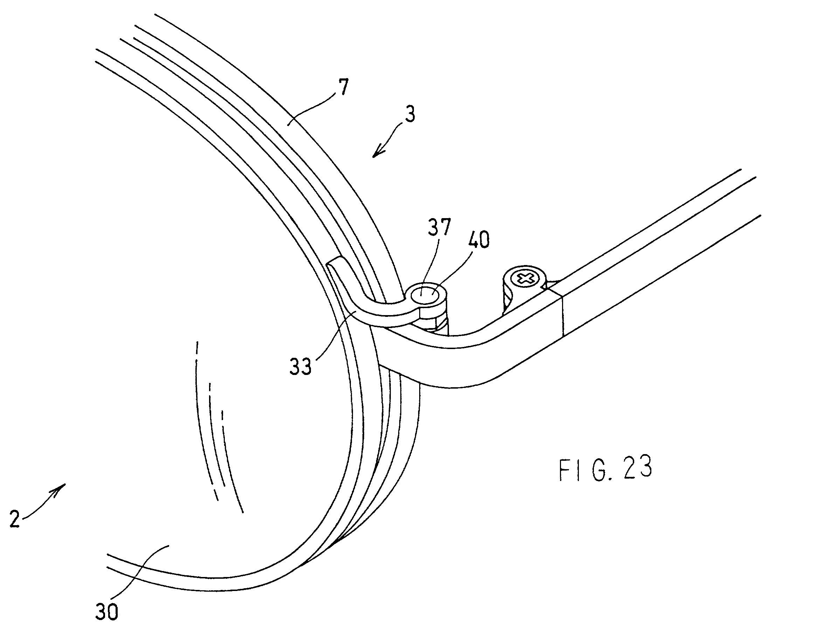

Thus, as shown in Figs. 23 and 22, the front auxiliary glasses 2 can be attached stably to the eyeglasses 3 by bringing the right and left auxiliary lens sections 30, 30 into contact with the right and left lens sections 7, 7 in a manner that the former covers the latter from the front side, and by placing the tip portion 40 of the mounting element 33 on the upper surface of the screw head 23 of the male screw 19 so that the magnet 26 and the magnetic element 37 can be attracted to each other.

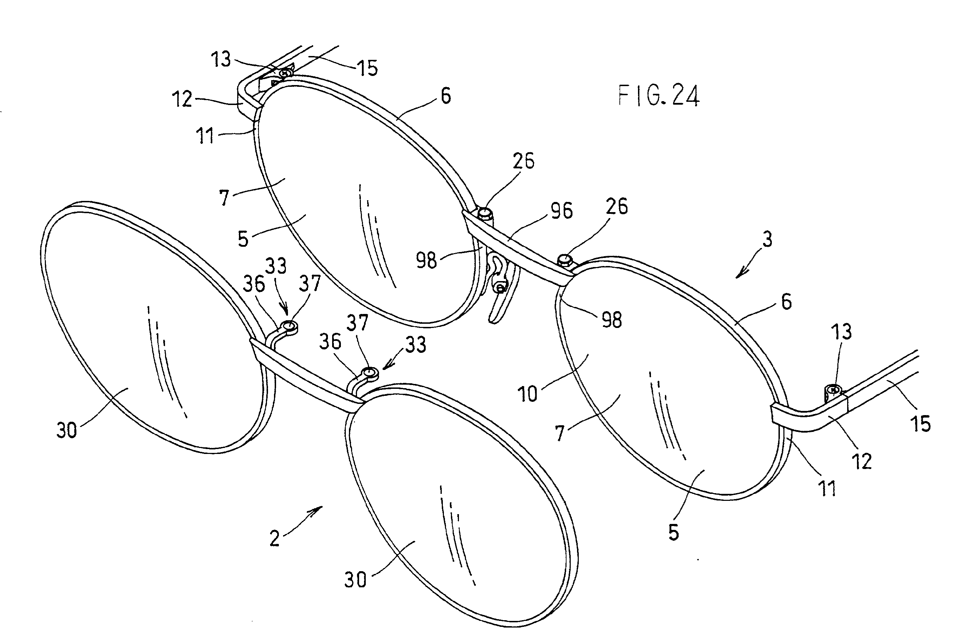

Fig. 24 shows the other embodiment of the mounting structure 1 for the apron type glasses. Eyeglasses 3 used for the structure 1 is structured such that a connecting element 12 as a bracket in an L-letter form which projects laterally and bend rearward, is connected to the right and left side portions 11,11, so that .a temple 15 is connected to an end portion of the connecting element 12 via a hinge 13 so that the temple may take open and close positions. The front frame 10 is structured such that the a bridge 96 connects an inner side portion of each of the right and left lens sections 7,7 which is formed to hold the lens 5 by the rim.

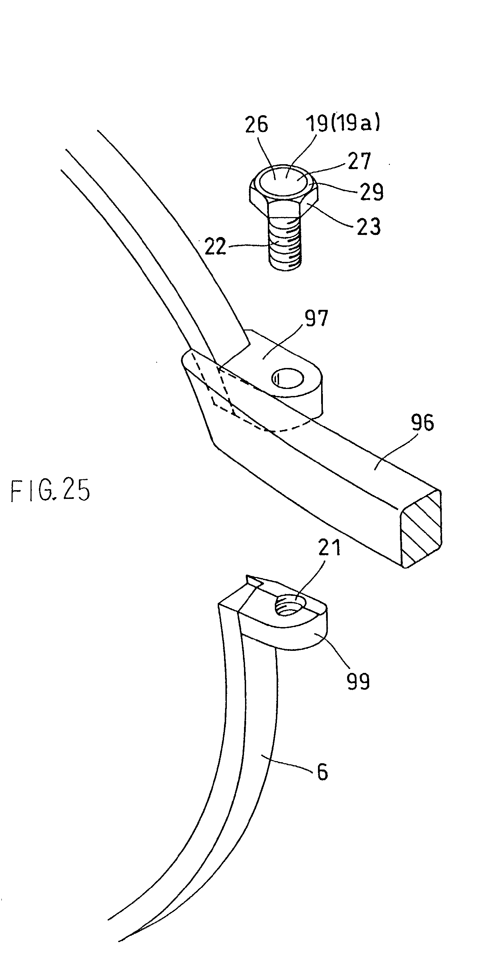

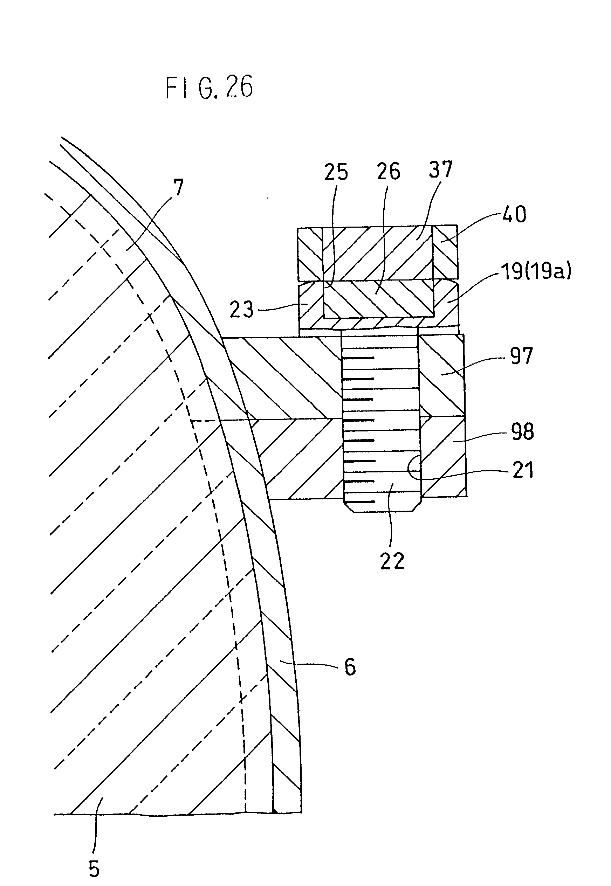

As shown in Fig. 25 and 26, the rim 6 is separated at an inner side part 98 to be provided with joint elements 97, 99 at both of the separated ends of the rim 6. The upper and lower joint elements 97, 99 are connected to each other by a male screw 19a as a connecting shaft 19 which is to be screwed vertically. The upper joint element 97 is fixed to the bridge 96. The male screw 19 is screwed into a screw hole 21, as shown in Fig. 26, after a ready installed screw for connecting the joint elements 97, 99 is removed therefrom, for example, and have a hexagonal, for example, screw head 23 at one end of the screw rod 22 that has the same diameter with the removed screw.

The flat disk-shaped magnet 26 is embedded and fixed into the concave 25 which is provided with in the screw head 23 as shown in Fig. 26, and as shown in Fig. 25, the upper surface 27 of the magnet 26 is made to form an even surface with the upper surface 29 of the screw head 23.

As shown in Fig. 24, the front auxiliary glasses 2 to be attached to the eyeglasses 3 are provided with the mounting element 33 at the inner side of each of the right and left auxiliary lens sections 30, 30 connected to each other, and with the magnetic element 37 being a magnet which can attract the magnet 26 with each other at the tip of the arm 36.

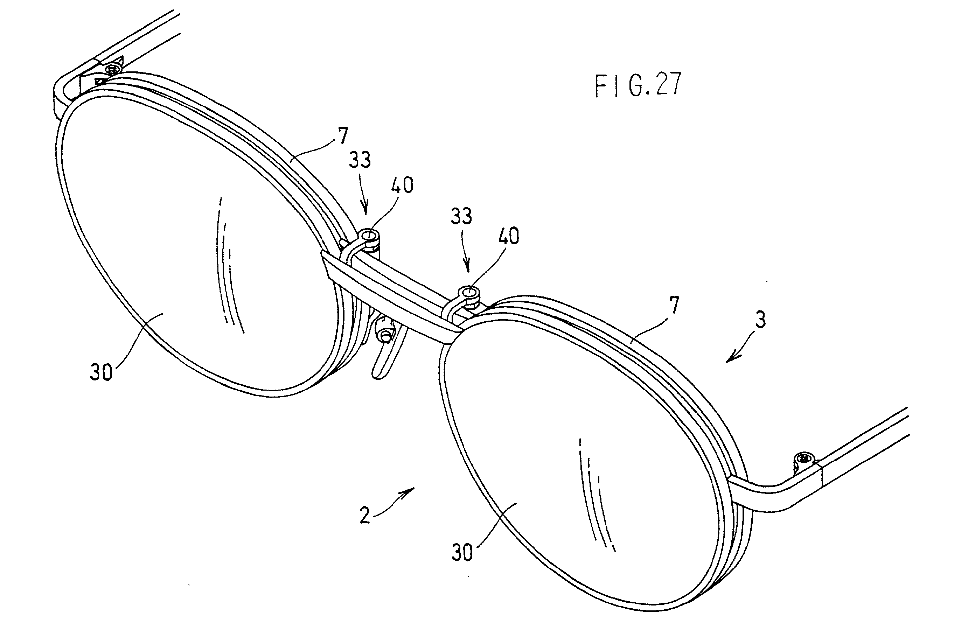

Thus, as shown in Figs. 27 and 26, the front auxiliary glasses 2 can be attached stably to the eyeglasses 3 by bringing the right and left auxiliary lens sections 30, 30 into contact with the right and left lens sections 7, 7 in a manner that the former covers the latter from the front side, and as shown in Fig. 26, by placing the tip portion 40 of the mounting element 33 on the upper surface of the screw head 23 of the male screw 19 so that the magnet 26 and the magnetic element 37 can be attracted to each other.

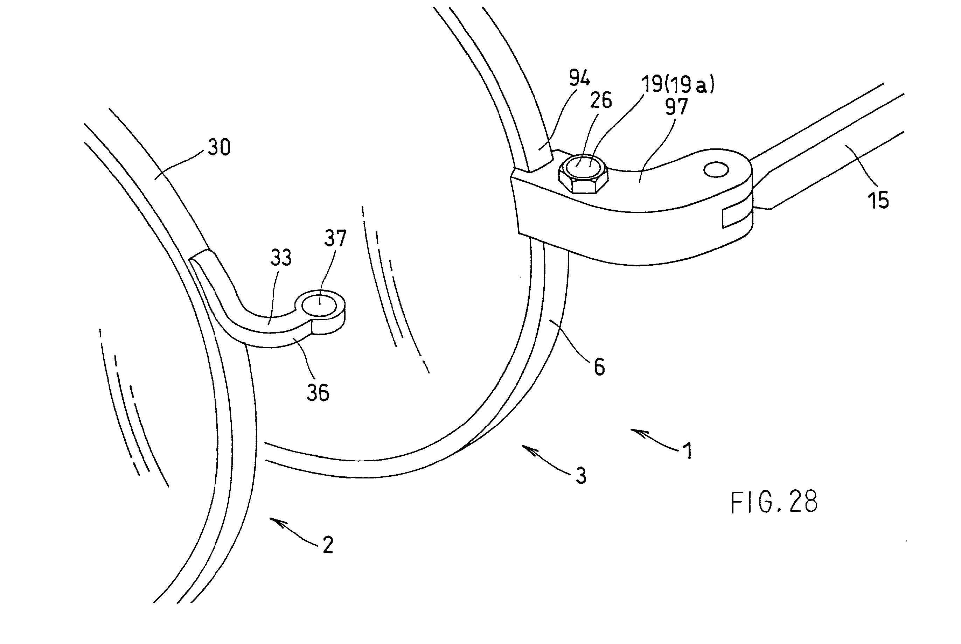

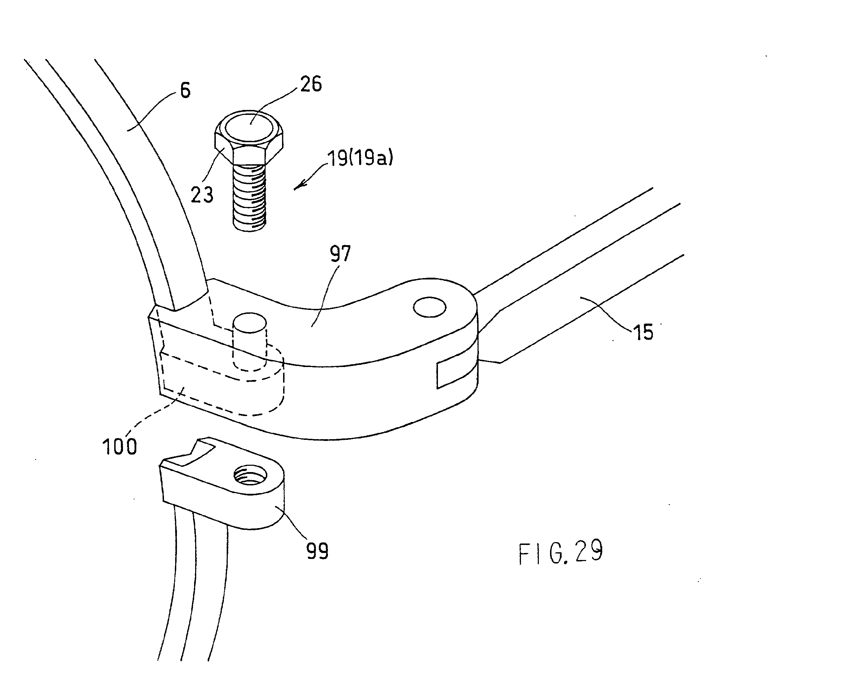

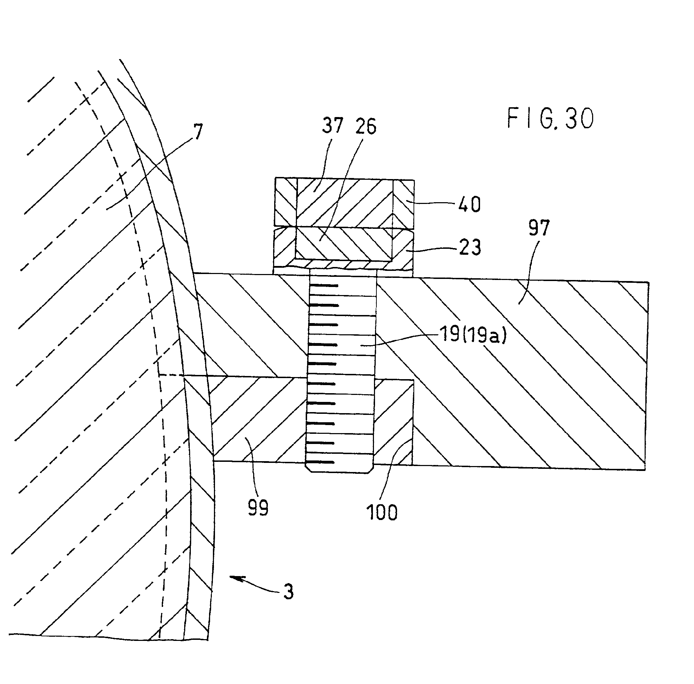

Figs. 28 to 31 show the other embodiment of the lens mounting structure for the front auxiliary glasses 3 according to this invention. The eyeglasses 3 used in the embodiment comprises joint elements 97,99 mounted at both ends of the rim 6 separated at the outer part 94 which joint elements are connected to each other by means of a vertically screwed male screw 19a as the connecting shaft 19. As shown in Figs. 29 and 30, the joint element 97 which constitutes the eyeglasses 3 is provided with a concave 100 at a lower surface thereof, and both of the joint elements 97 and 99 are connected to each other by the male screw 19a while the lower joint element 99 is inserted into the concave 100.

As shown in Fig. 28, the front auxiliary glasses 2 to be mounted to the eyeglasses 3 is provided with the mounting element 33 at the outer part of the auxiliary lens 30 and the magnetic element 37 being a magnet which can attract the magnet 26 with each other, which magnetic element 37 is mounted on the tip portion of the arm 36 in the same manner as mentioned above, and which magnet 26 is mounted in the screw head 23 of the male screw 19a in the same manner as mentioned above.

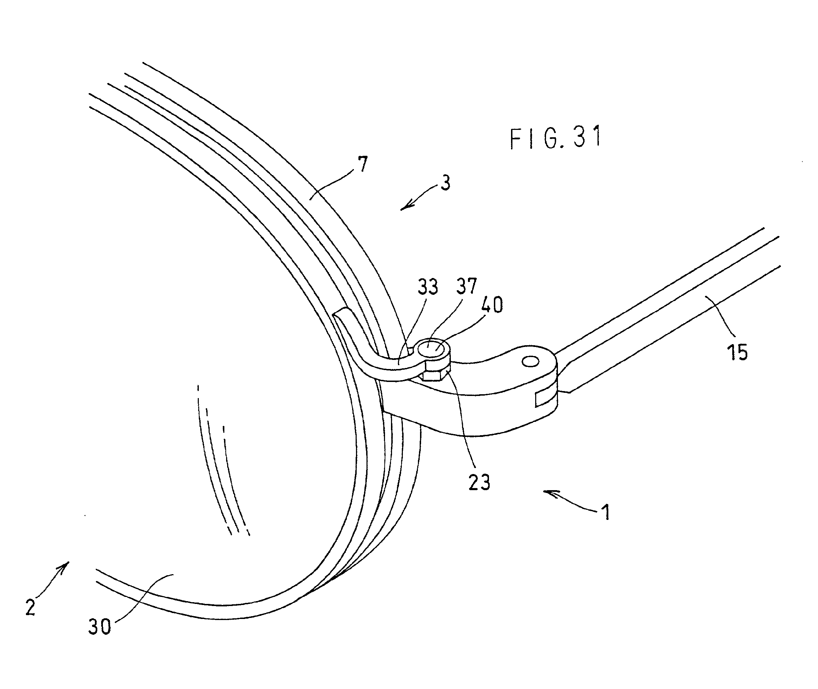

Thus, as shown in Fig. 31 and 30, the front auxiliary glasses 2 can be attached stably to the eyeglasses 3 by bringing the right and left auxiliary lens sections 30, 30 into contact with the right and left lens sections 7, 7 in a manner that the former covers the latter from the front side, and by placing the tip portion 40 of the mounting element 33 on the upper surface of the screw head 23 of the male screw 19 so that the magnet 26 and the magnetic element 37 can be attracted to each other.

The structure as above can also be applied to a case where joint elements mounted on both ends of the separated rim at the inner portion are connected to each other by the male screw 19a which is vertically screwed.

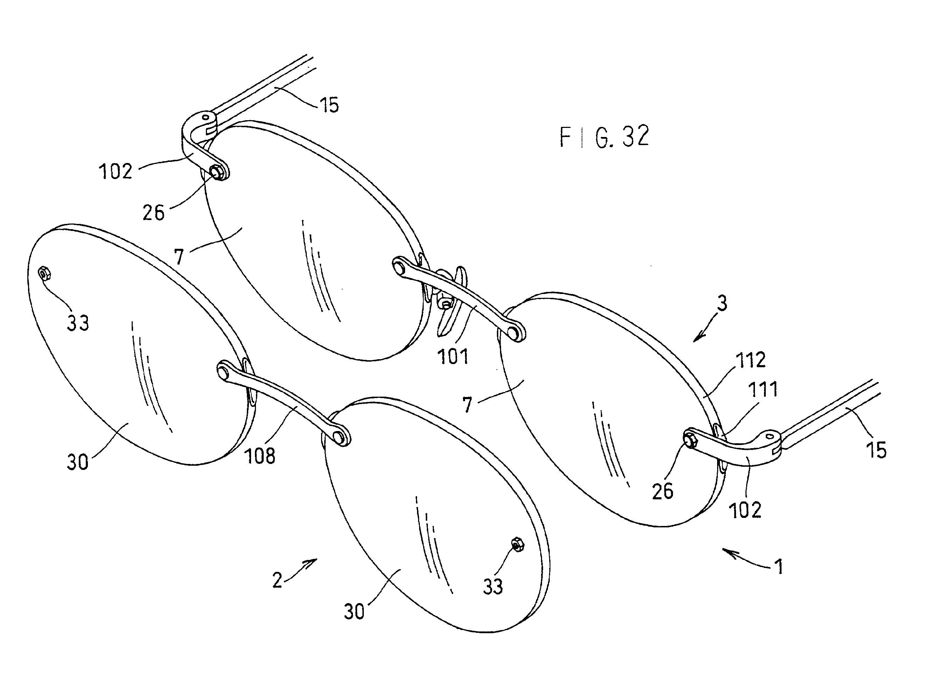

Fig. 32 shows the other embodiment of the lens mounting structure 1 for the front auxiliary glasses 2 according to this invention. The eyeglasses 3 used in this embodiment are structured to be so-called "two-point glasses" in which at the outer side of each of the right and left lens sections 7, 7, being the lenses themselves, are directly connected to each other by the connecting element 10 at the inner sides thereof, and each of the temples 15, 15 is connected by outer side connecting elements 102, 102, in a manner that the temples 15, 15 can open and close.

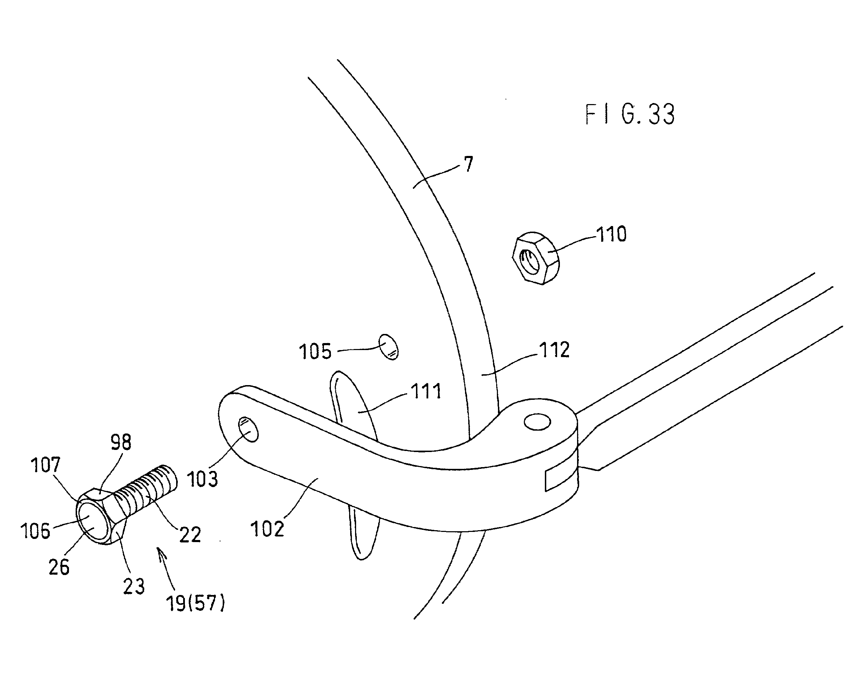

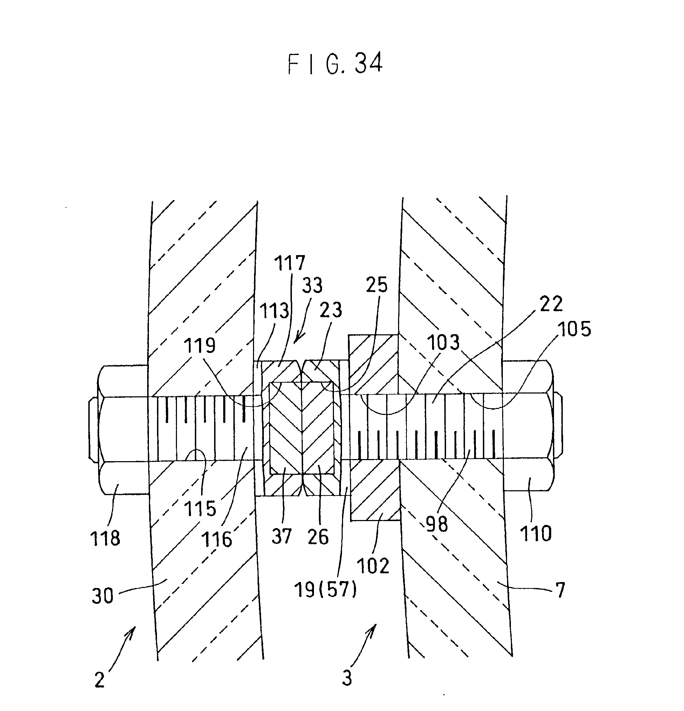

As shown in Figs 33, 34, the outer side connecting element 102 is connected by the screw element 57 as a connecting shaft 19 consisting of a male screw element 98 and a nut 110 which fits the male screw element 98 and the axis of which is in a direction of the front and the rear. The male screw element 98 consists of a hexagonal, for example, screw head 23 at the front end of the screw rod 22 which can go through a hole 103 bored at the front of the outer side connecting element 102 and a hole 105 bored at the lens section 7. The flat disk-shaped magnet 26 is embedded and fixed into the concave 25 which is provided with in the screw head 23 as shown in Fig. 34, and the front surface 106 of the magnet 26 is made to form an even surface with the front surface 107 of the screw head 23.

As shown in Fig. 34, by fitting the nut 110 to the screw rod 22 and screwing the same up at the rear side of the lens after inserting the screw rod 22 of the male screw element 98 through the holes 103, 105, the restriction element 111 attached to the outer side connecting element enables the connecting element 102 to be connected to the lens 7 without revolving while the restriction element 111 is in contact with the outer surface of the of the lens 7, as shown in Fig. 32.

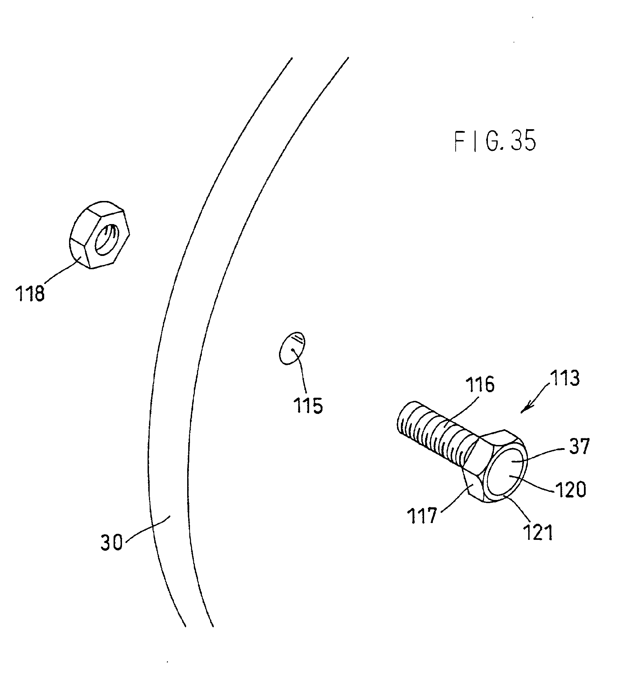

As shown in Fig. 32, the front auxiliary glasses 2 consists of a connecting element 108 connecting the right and left auxiliary lens section 30, 30 which can cover the right and left lens section 7, 7 from the front side, and the mounting element 33 mounted on the circumference of each of the auxiliary lens sections 30, 30. According to the present embodiment, as shown in Figs. 34 and 35, the mounting element 33 consists of a screw 113 provided with a magnet, which screw 113 provided with the magnet consists of a screw rod 116 which can be inserted through a hole 115 bored at the outer side of the auxiliary lens 30, a hexagonal, for example, screw head 117 mounted at the rear end of the screw rod 116, and the magnetic element 37 being a magnet which can attract the magnet 26 with each other and is embedded in and fixed to a circular concave 119 bored at the screw head 117 in a manner that a rear surface 120 of the magnetic element 37 forms an even surface with the rear surface 121 of the screw head 117. As shown in Fig. 34, the mounting element 33 is formed in a manner that the screw rod 116 of the screw 113 provided with a magnet is inserted through the hole 115 and then is fitted to a nut 118 and screwed at the rear side of the auxiliary lens 30.

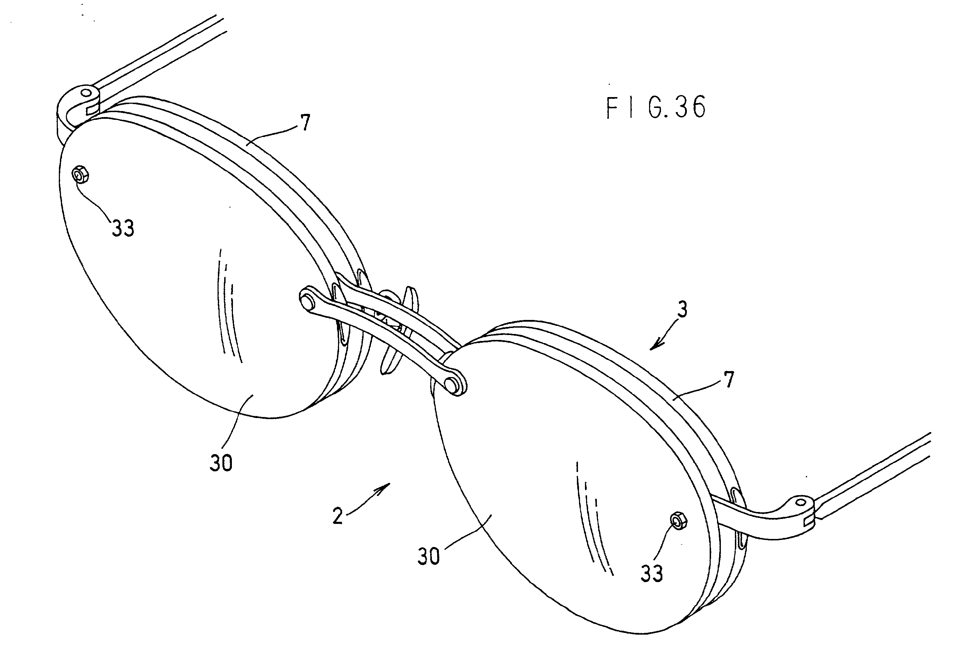

Thus, as shown in Fig. 36, the front auxiliary glasses 2 can be attached stably to the eyeglasses 3 by bringing the right and left auxiliary lens sections 30, 30 into contact with the right and left lens sections 7, 7 in a manner that the former covers the latter from the front side, and making the magnetic element 37 of the mounting element 33 and the magnet 26 of the male screw element 98 attract to each other.

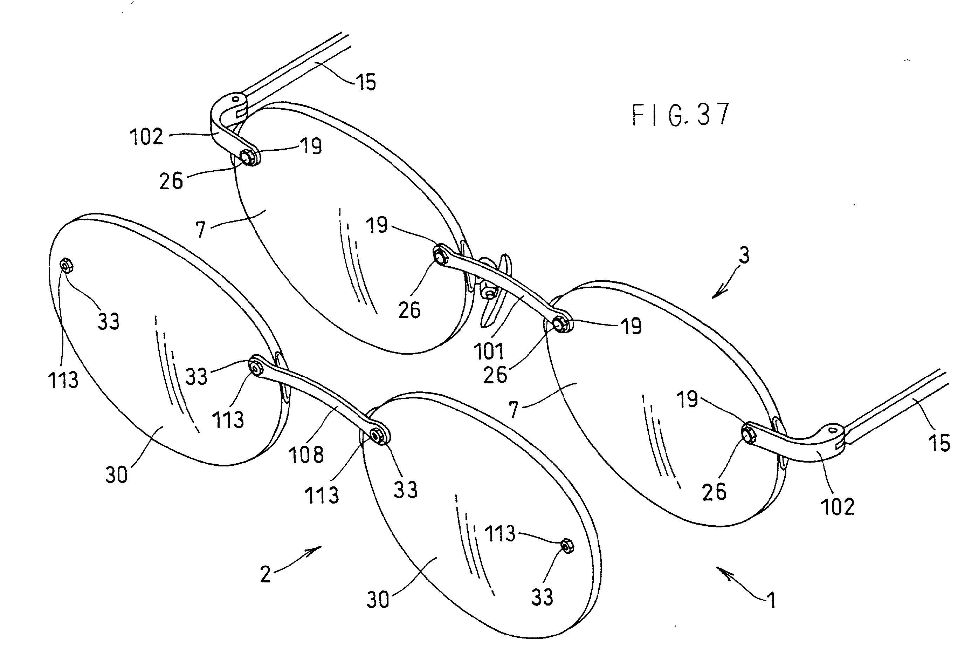

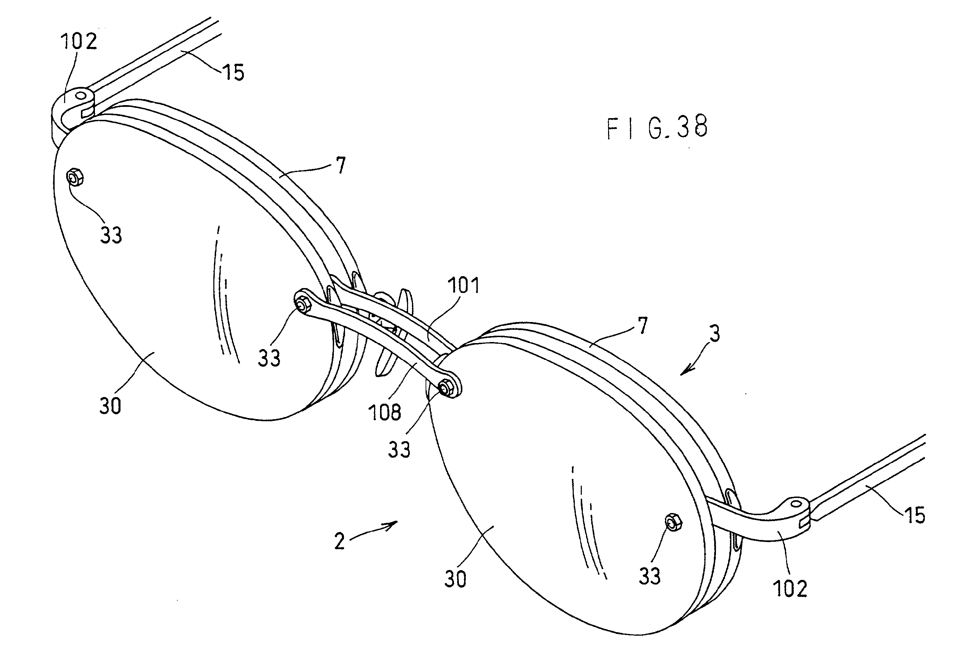

In the present embodiment, as shown in Fig. 37, when a structure is adopted using the male screw element 98 like the above-mentioned structure as a means to fix the inner side connecting element 101 to the lens section 7 connecting the right and left lens sections 7, 7 of the eyeglasses 3, and when a structure is adopted using the screw 113 with the magnet like the above-mentioned structure as a means to connect the connecting element 108 to the auxiliary lens section 30 connecting the right and left auxiliary lens sections 30, 30 of the front auxiliary glasses 2, the front auxiliary glasses 2 can be firmly fixed to the eyeglasses 3 as shown in Fig. 38 by making the magnet 26 of each of the four male screw elements 98, 98, 98, 98 mounted to inner and outer sides of the glasses 3 and the magnetic element of the mounting element 33 constituted by each of the four screw 113, 113, 113, 113 with magnets mounted at the inner and outer sides of the front auxiliary glasses 3 attract to each other.

In case the eyeglasses 3 used in the lens mounting structure 1 for the front auxiliary glasses 2 according to the present invention are structured to be "two-point" glasses like the above-mentioned glasses, as far as stability of the mounting condition of the front auxiliary glasses 2 are secured, only the inner side connecting element 101 may be connected by the male screw element 98 provided with the magnet 26, and in the front auxiliary glasses 2, the right and left auxiliary lens sections 7, 7 may be structured in a manner that the mounting element 33 comprising of the screw 113 with a magnet is provided with at the inner side of each of the right and left auxiliary lens sections 30, 30 which can cover the lens sections 7, 7 from the front side. When the eyeglasses 3 and the front auxiliary glasses 2 are thus structured, the front auxiliary glasses 2 can be attached stably to the eyeglasses 3 by bringing the right and left auxiliary lens sections 30, 30 into contact with the right and left lens sections 7, 7 in a manner that the former covers the latter from the front side, and making the magnetic element 37 of the mounting element 33 and the magnet 26 of the male screw element 98 attract to each other.

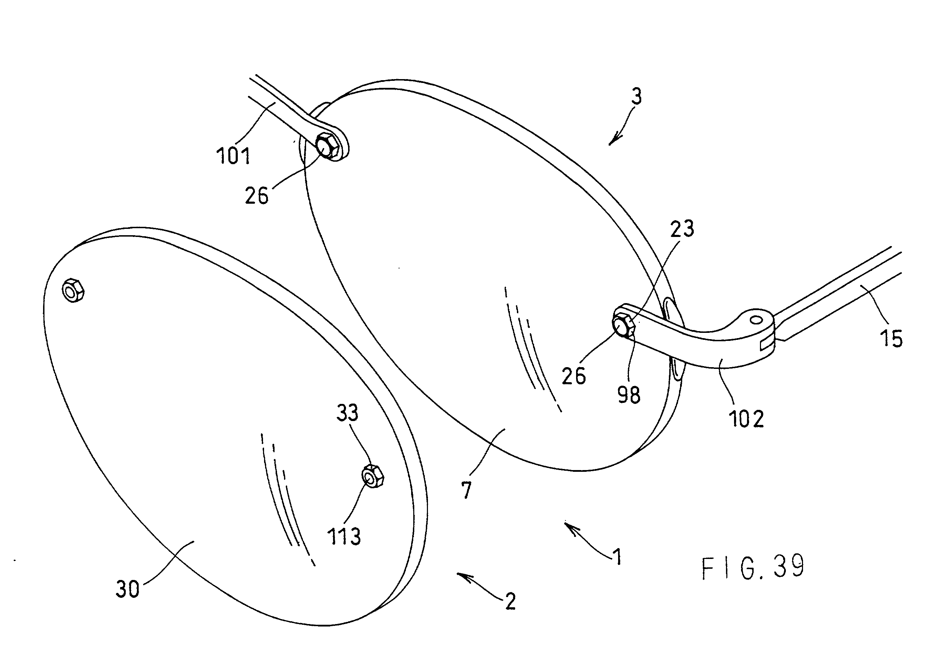

Fig. 39 shows the other embodiment of the lens mounting structure 1 for the front auxiliary glasses 2 according to this invention, in which each of right and left independent auxiliary lens sections 30, 30 is detachably attached to each of the right and left lens sections 7, 7 of the eyeglasses 3 being structured as "two-point" glasses as above, by means of magnetic attraction.

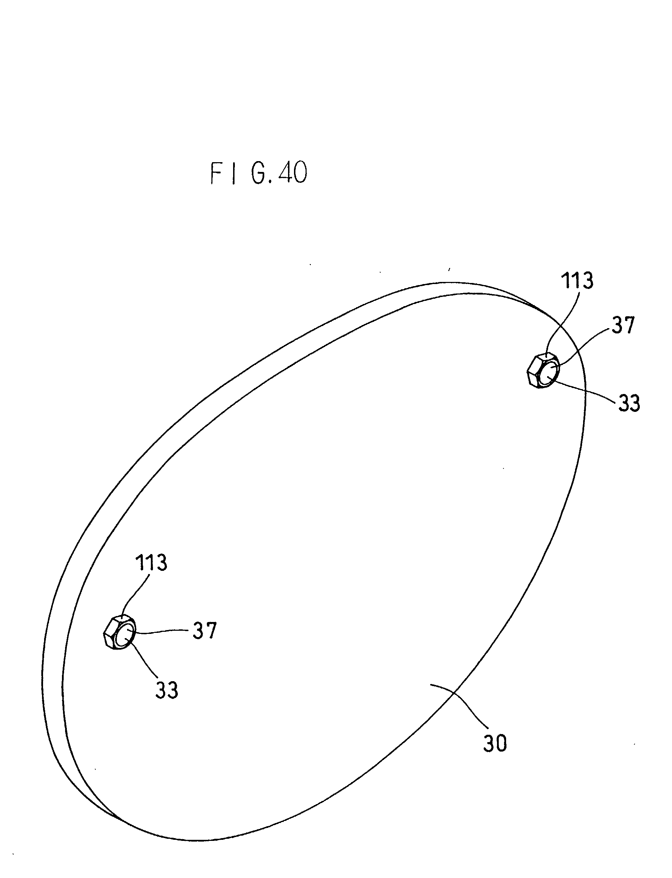

Each of the connection of the inner connecting element 101 and the outer connecting element 102 to the lens section 7 is performed by means of the male screw element 98 provided with the magnet 26 at the screw head 23, in a same manner as above-mentioned. Further, as shown in Figs. 39 and 40, the mounting element 33 is mounted at each of the inner and outer sides of the auxiliary lens section 30 by means of the screw 113 with a magnet as above-mentioned, and the mounting element has a magnetic element 37 being a magnet which can attract the magnet 26 with each other.

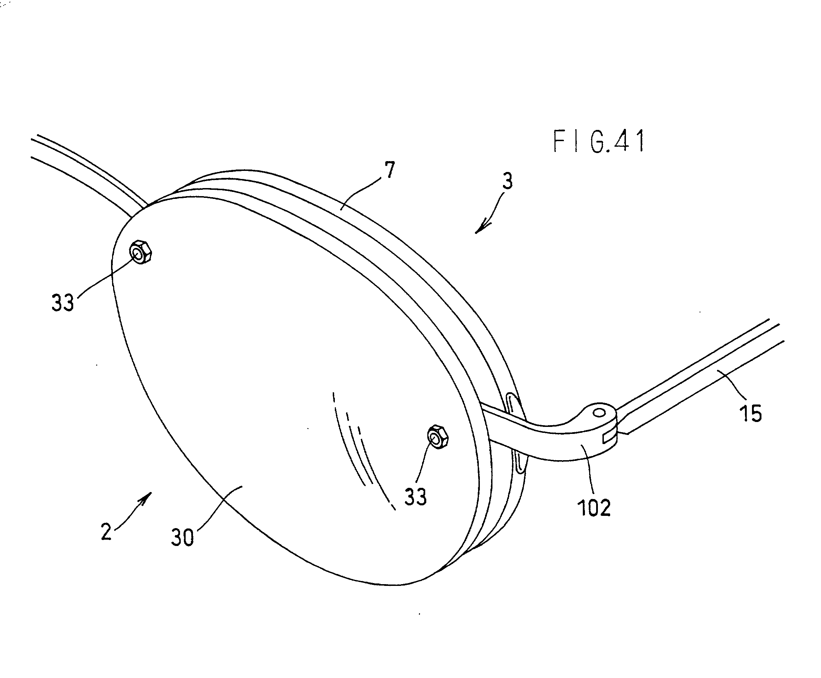

Thus, as shown in Fig. 41, the auxiliary lenses 30, 30 can be attached stably to the eyeglasses 3 by bringing the front auxiliary glasses 2 into contact with the eyeglasses 3 in a manner that the right and left auxiliary lens sections 30, 30 cover the right and left lens sections 7, 7 from the front side, and by making the magnet 26 and the magnetic element 37 attract to each other.

In the above-mentioned second embodiment, the screw element 57 consisting of the female screw element 85 and the male screw element 86 as shown in Figs. 16 and 17 may be used instead of the connecting element 19 as the male screw 19a. Further, instead of using the screw element 57 in the above-mentioned third, embodiment, it may be considered that a male screw which fits the lens section 7 is used to connect the inner side connecting element 101 and the outer side connecting element 10 to the lens section 7. Furthermore, the connecting shaft 19 is not necessarily structured to be the above-mentioned screw rod. To be specific, the connecting shaft 19 may be structured as a pin and the like having a magnet on the upper surface thereof, as far as the pin and the like can function as a shaft constituting the hinge 13. Still further, a press fitting pin and the like, which has a function for fixing to the lens section 7 and has a magnet attached onto the front surface thereof, may also be used, as far as the press fitting pin and like can connect the outer side connecting element 102 and the inner side connecting element 101 to the lens section 7. The whole pin and the like may also be magnetic.

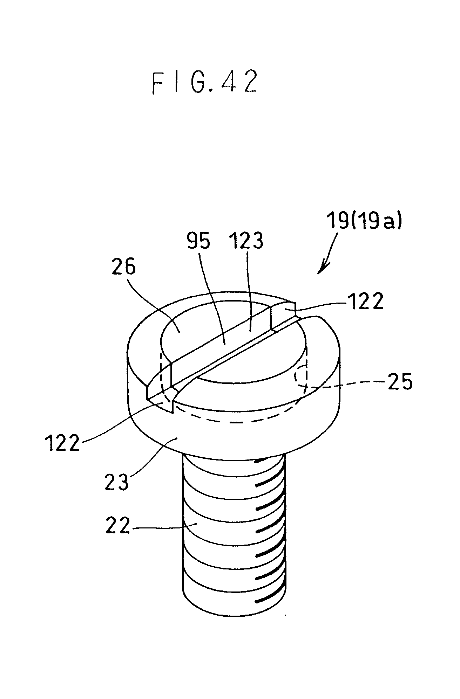

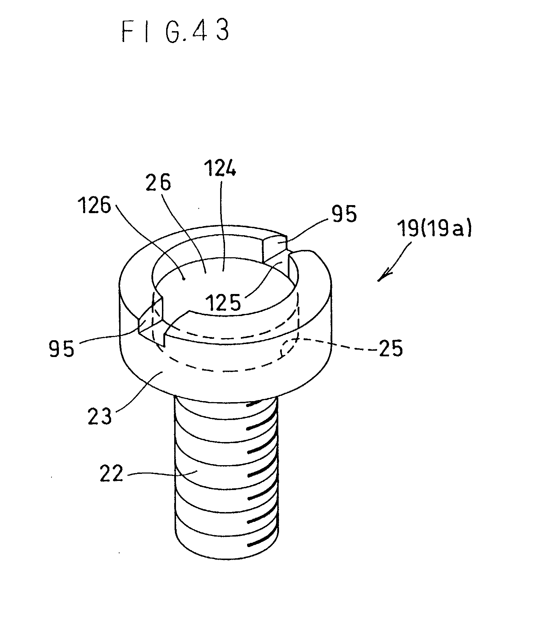

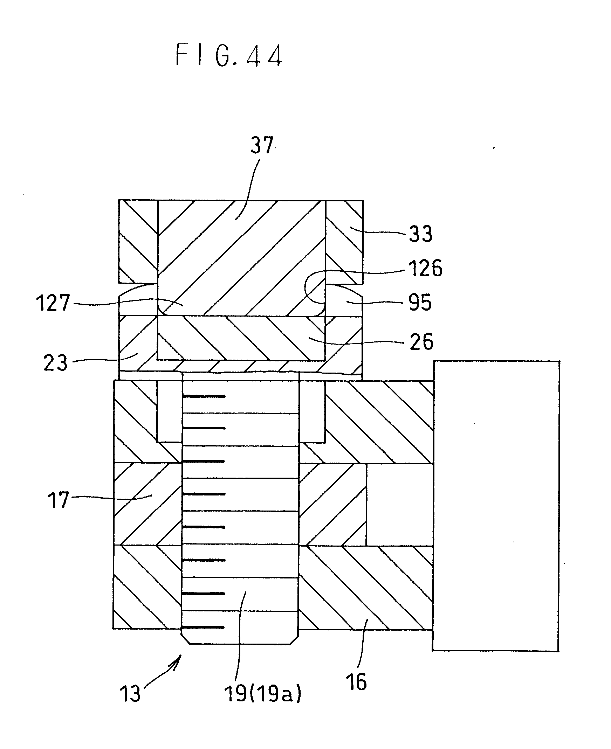

Fig. 42 shows the other embodiment of the male screw 19a, in which a circular screw head 23 is provided with the screw rod 22 at the end portion thereof, and a groove 95, which fits to a tip of a screwdriver, is provided with the screw head 23. On the screw head 23, the circular concave 25 is provided with into which the flat disc-shaped magnet 26 is embedded and fixed. A groove 123 is provided in the screw head 23 in a manner that the groove 123 and the groove 122 provided in the screw head 122 are arranged to form a continuous single groove, and the continuous groove represents the groove 95 fitting to a tip of a screwdriver. Fig. 43 shows the other embodiment of the screw rod 19a, whose concave 25 is formed deeper to the extent that a surface 124 of the magnet 26 which is embedded and fixed into the concave 26 is made to be an even level with or to be lower than the bottom of the groove 95 provided with the screw head 23. There is an advantage in this formation that the groove 123 does not need to be provided with the magnet 26. As a consequence of the formation of the deeper concave 25, a fitting concave 126, whose bottom is the upper surface 124 of the magnet, is formed. Consequently, as shown in Fig. 44, for example,

The whole male screw 19a may be made of magnet. In this case a fitting groove is provided with the screw head 23 for a tip of screwdriver to be inserted.

Besides the above-mentioned structure using the magnet, the magnetic element 37 provided with the lens mounting structure 33 may be formed with a metal element of iron and the like which can magnetically attract the upper or front surface of the connecting shaft 19.

Besides the above-mentioned sunglasses, the front auxiliary glasses may also be structured to be glasses to correct vision of the glasses in use or to be polarizing glasses.

Besides what is indicated in the above-mentioned embodiments, the above-mentioned screw element 57 provided with male screw elements 66, 86, which are screwed in vertical direction or in the direction of front and rear, may be variously structured as long as the screw element 57 is provided with such a male screw element. In case the screw element 57 consists of the female screw element 62 and the male screw element 66, as shown in Fig. 12, or consists of the female screw element 85 and the male screw element 86, as shown in Figs. 16 and 17, the female screw element 62 or the male screw element 86 may have a magnet which can attract the magnetic element 37 of the mounting element 33 with each other.

## Claims

1. A lens mounting structure for front auxiliary glasses in which front auxiliary glasses are mounted detachably onto eyeglasses by means of magnetic attraction, said front auxiliary glasses comprising right and left auxiliary lens sections, which are connected to each other, having a mounting element respectively at the outside of each of the auxiliary lens sections, and eyeglasses comprising a front frame having right and left lens sections, which are connected to each other, a connecting element provided with right and left outside portions of the front frame, a temple connected to the connecting element to be able to open and close by means of a hinge, said lens mounting structure further comprising;
the hinge having hinge elements, each of which is mounted onto the connecting element and the temple; said hinge elements being connected to each other by means of a connecting shaft so as to be pivoted rotatably,
a magnet mounted onto an upper surface of the connecting shaft, and
a magnetic element, which is attractive to the magnet, mounted onto the connecting element; thereby the magnet and the magnetic element are attracted to each other so as to mount the front auxiliary glasses onto the eyeglasses in such a state that right and left auxiliary lens sections cover the right and left lens sections from the front side thereof.

2. A lens mounting structure for front auxiliary glasses in which front auxiliary glasses are mounted detachably onto eyeglasses by means of magnetic attraction, said front auxiliary glasses comprising right and left auxiliary lens sections, which are connected to each other, having a mounting element respectively at the outside of each of the auxiliary lens sections, and eyeglasses comprising right and left lens sections which are connected to each other by holding lenses with a rim, said lens mounting structure further comprising;
the rim separated to rim ends at its outer side portion and having upper and lower joint elements at both of the separated ends of the rim, said upper and lower joint element being connected by a connecting shaft of upper and lower directions,
a magnet mounted onto an upper surface of the connecting shaft,
a magnetic element, which is attractive to the magnet, mounted onto the connecting element; thereby the magnet and the magnetic element are attracted to each other so as to mount the front auxiliary glasses onto the eyeglasses in such a state that right and left auxiliary lens sections cover the right and left lens sections from the front side thereof.

3. A lens mounting structure for front auxiliary glasses in which front auxiliary glasses are mounted detachably onto eyeglasses by means of magnetic attraction, said front auxiliary glasses comprising right and left auxiliary lens sections, which are connected to each other, having a mounting element respectively at the inside of each of the auxiliary lens sections, and eyeglasses comprising right and left lens sections which are connected to each other by holding lenses with a rim, said lens mounting structure further comprising;
the rim separated to rim ends at its inner side portion and having upper and lower joint elements at both of the separated ends of the rim, said upper and lower joint element being connected by a connecting shaft of upper and lower directions,
a magnet mounted onto an upper surface of the connecting shaft,
a magnetic element, which is attractive to the magnet, mounted onto the connecting element; thereby the magnet and the magnetic element are attracted to each other so as to mount the front auxiliary glasses onto the eyeglasses in such a state that right and left auxiliary lens sections cover the right and left lens sections from the front side thereof.

4. A lens mounting structure for front auxiliary glasses in which front auxiliary glasses are mounted detachably onto eyeglasses by means of magnetic attraction, said front auxiliary glasses comprising right and left auxiliary lens sections, which are connected to each other, having a mounting element respectively at the outside of each of the auxiliary lens sections, and eyeglasses comprising right and left lens sections, which are connected to each other, an outside connecting element connected to each of the outside of the right and left lens sections, said lens mounting structure further comprising;
the outside connecting element connected to the lens section by means of a connecting shaft of forward and rearward directions,
a magnet mounted onto a front surface of the connecting shaft, and
a magnetic element, which is attractive to the magnet, mounted onto the connecting element; thereby the magnet and the magnetic element are attracted to each other so as to mount the front auxiliary glasses onto the eyeglasses in such a state that right and left auxiliary lens sections cover the right and left lens sections from the front side thereof.

5. A lens mounting structure for front auxiliary glasses in which each of right and left independent auxiliary glasses is mounted detachably onto right and left lens sections of eyeglasses by means of magnetic attraction, said eyeglasses comprising right and left lens sections, which are connected to each other with their inside connecting portions, an outside connecting element connected to each of the outside of the right and left lens sections, and a temple connected to each of the outside connecting elements to be able to open and close, said lens mounting structure further comprising;
the outside connecting element and the outside connecting element both being connected to the lens sections by means of a connecting shaft of forward and rearward directions,
a magnet mounted onto a front surface of the connecting shaft, and
a magnetic element, which is attractive to the magnet, mounted onto inside and outside portions of the auxiliary lens sections; thereby the magnet and the magnetic element are attracted to each other so as to mount the front auxiliary glasses onto the eyeglasses in such a state that right and left auxiliary lens sections cover the right and left lens sections from the front side thereof.

6. The lens mounting structure for front auxiliary glasses as claimed in any one of claims 1, 2 or 3, wherein the connecting element comprises a male screw element which is screwed in up and down directions, or a screw element having a male screw element which is screwed in up and down directions and which has an axis of up and down directions.

7. The lens mounting structure for front auxiliary glasses as claimed in claim 1, wherein the connecting element comprises a female screw element which is positioned on an upper side, and a male screw element which is positioned on a lower side, said female screw element having a female screw portion with its lower portion for screwing the male screw element, and the magnet being mounted onto the upper surface of the female screw element, thereby the temple is connected to the connecting element to be able to open and close by screwing the male screw element into the female screw element.

8. The lens mounting structure for front auxiliary glasses as claimed in claims 2 or 3, wherein the connecting element comprises a female screw element which is positioned on an upper side, and a male screw element which is positioned on a lower side, said female screw element having a female screw portion with its lower portion for screwing the male screw element, and the magnet being mounted onto the upper surface of the female screw element, thereby the upper and lower joint elements are connected to each other by screwing the male screw element into the female screw element.

9. The lens mounting structure for front auxiliary glasses as claimed in claims 4 or 5, wherein the connecting element comprises a male screw element which is screwed in forward and rearward directions, or a screw element having a male screw element which is screwed in forward and rearward directions and which has an axis of forward and rearward directions.

10. The lens mounting structure for front auxiliary glasses as claimed in claims 4 or 5, wherein the connecting element comprises a female screw element which is positioned forward, and a male screw element which is positioned rearward, said female screw element having a female screw portion with its forward portion for screwing the male screw element, and the magnet being mounted onto the front surface of the female screw element, thereby the connecting element is connected to the lens section by screwing the male screw element into the female screw element.

11. The lens mounting structure for front auxiliary glasses as claimed in claim 6, wherein the male screw provides a screw head a concave of which is provided with a concave into which the magnet is fit and fixed so as to provide the magnet with the upper surface thereof.

12. The lens mounting structure for front auxiliary glasses as claimed in claim 9, wherein the male screw provides a screw head a concave of which is provided with a concave into which the magnet is fit and fixed so as to provide the magnet with the front surface thereof.

13. The lens mounting structure for front auxiliary glasses as claimed in claim 8, wherein the male screw provides a screw head a concave of which is provided with a concave into which the magnet is fit and fixed so as to provide the magnet with the upper surface of the screw element.

14. The lens mounting structure for front auxiliary glasses as claimed in claim 10, wherein the male screw provides a screw head a concave of which is provided with a concave into which the magnet is fit and fixed so as to provide the magnet with the front surface of the screw element.

15. The lens mounting structure for front auxiliary glasses as claimed in claim 11 or 13, wherein the upper surface of the magnet is slightly inclined downwardly from the upper surface of the screw head so as to form a fitting concave with the upper surface, so that the magnet and the magnetic element may be attracted to each other in such a state that the lower end portion of the connecting element is tightly fitted into the fitting concave, thereby the front auxiliary glasses may be attached to the eyeglasses.

16. The lens mounting structure for front auxiliary glasses as claimed in claim 11 or 14, wherein the upper surface of the magnet is slightly inclined rearward from the front surface of the screw head so as to form a fitting concave with the upper surface, so that the magnet and the magnetic element may be attracted to each other in such a state that the rear end portion of the connecting element is tightly fitted into the fitting concave, thereby the front auxiliary glasses may be attached to the eyeglasses.

17. The lens mounting structure for front auxiliary glasses as claimed in any one of claims 1 to 16, the magnetic element mounted onto the connecting element comprises a magnet, which may be attracted to the magnet each other.
